# EUROPÄISCHE PATENTSCHRIFT

(11) **EP 4 266 955 B1**
(45) Veröffentlichungstag und Bekanntmachung des Hinweises auf die Patenterteilung: **11.06.2025**
(21) Anmeldenummer: 23701939.3
(22) Anmeldetag: 24.01.2023
(51) Int. Cl.: A47J 31/36, A47J 31/44

(54) **VORRICHTUNG ZUR AUFNAHME EINES SIEBTRÄGERS, KAFFEEMASCHINE UND VERWENDUNGEN DER VORRICHTUNG**
DEVICE FOR RECEIVING A FILTER CARRIER, COFFEE MAKER, AND USES OF THE DEVICE
DISPOSITIF DE RÉCEPTION D'UN PORTE-FILTRE, MACHINE À CAFÉ ET UTILISATIONS DU DISPOSITIF

(30) Priorität: 09.03.2022 DE 102022202361
(43) Veröffentlichungstag der Anmeldung: 01.11.2023
(73) Patentinhaber: WMF GmbH, 73312 Geislingen/Steige (DE)
(72) Erfinder: SIMMA, Tobias, 73072 Donzdorf (DE); STÄB, Rolf, 89191 Nellingen (DE)
(74) Vertreter: Pfenning, Meinig & Partner mbB
(86) Internationale Anmeldenummer: PCT/EP2023/051667
(87) Internationale Veröffentlichungsnummer: WO 2023/169729

(56) Entgegenhaltungen:
- EP-A1- 3 037 023
- WO-A1-2021/255705
- DE-U1- 202014 002 225
- US-A1- 2016 316 960

## Beschreibung

Es wird eine Vorrichtung zur Aufnahme eines zur Druckextraktion von Kaffee geeigneten Siebträgers bereitgestellt. Die Vorrichtung enthält eine Aufnahmeeinheit, die dazu geeignet ist, einen zur Druckextraktion von Kaffee geeigneten Siebträger durch eine Drehung des Siebträgers in eine erste Drehrichtung um eine Drehachse des Siebträgers aufzunehmen, einen im Wesentlichen flachen Schaltring, der drehbar auf einem Teil der Aufnahmeeinheit gelagert ist und ein Strukturelement aufweist, wobei die Vorrichtung ferner ein bewegliches oder unbewegliches Verriegelungselement enthält, wobei das Verriegelungselement dazu geeignet ist, sich zu dem Strukturelement des Schaltrings hin zu bewegen und von dem Strukturelement des Schaltrings weg zu bewegen, und/oder das Strukturelement des Schaltrings dazu geeignet ist, sich zu dem Verriegelungselement der Vorrichtung hin zu bewegen und von dem Verriegelungselement der Vorrichtung weg zu bewegen. Ferner wird eine Kaffeemaschine enthaltend die erfindungsgemäße Vorrichtung bereitgestellt und es werden Verwendungen der Vorrichtungen vorgeschlagen.

Bei Siebträgermaschinen gibt es zwei verschiedene Konzepte, nämlich einerseits Halbautomaten und andererseits ¾ Automaten, die auch als Hybridmaschinen bezeichnet werden.

Bekannte Halbautomaten sind beispielsweise in der EP 2 392 241 A1 oder WO 2020 094 794 A1 gezeigt. Hier werden die manuellen Aktionen, wie Einmahlen des Kaffeemehls, Egalisieren, Tampern und Einhängen des Siebträgers von einem unterwiesenen oder ausgebildeten Fachmann (d.h. ein sog. "Barista") ausgeführt, da diese Tätigkeiten unmittelbaren Einfluss auf die Kaffeequalität haben. Beim Einsetzen des Siebträgers wird dieser durch den Barista in den Siebträgerkopf eingesetzt und mittels einer Drehung des Siebträgers nach oben gegen eine Dichtung im Siebträgerkopf gepresst. Durch die Verpressung findet die Abdichtung des Systems statt. Die Verpressung und die dadurch resultierende Reibkraft halten den Siebträger während der Brühung in seiner Position.

Bekannte ¾ Automaten (Hybridmaschinen) sind beispielsweise in der EP 2 811 876 B1 gezeigt. Hier werden die manuellen Tätigkeiten, welche einen Einfluss auf die Kaffeequalitäten haben, automatisch durch die Maschine ausgeführt. Dadurch kann auch eine ungeübte Person (d.h. ein "Laie") auf einfache Weise einen Espresso wie ein Barista herstellen. Hierzu hängt er den Siebträger ein und drückt die entsprechende Produkttaste. Die Maschine mahlt über eine integrierte Kaffeemühle das Kaffeemehl direkt in den Siebträger, von oben wird ein Brühkolben in den Siebträger abgesenkt, der das Kaffeemehl egalisiert, tampert und über eine radiale Dichtung das System zum Brühen abdichtet.

Bei beiden der oben genannten Konzepte erfolgt die Brühung mit 94°C -98°C heißem Wasser unter einem Druck von min. 8 bar.

Der Nachteil der beiden bekannten Konzepte ist, dass es möglich ist, während einer Brühung den Siebträger herauszudrehen und somit das unter Druck stehende Brühsystem zu öffnen. Geschieht dies (z.B. aus Versehen), werden schlagartig mit einem Druck von 8 bar heißes Wasser und Kaffeesatz frei, welche zu Verbrennungen und Verbrühungen führen können. Zudem kommt es hierbei zu einem Verschmutzen des Getränkeausgabebereichs mit Kaffeesatz und Wasser, was eine zeitaufwändige Reinigung des Getränkeausgabebereichs nach sich zieht.

Bei den reinen Halbautomaten ist das Öffnen unter Druck auf Grund der Reibung und Verpressung für einen Benutzer etwas schwerer durchzuführen und auch weniger wahrscheinlich, da es sich beim Bediener meistens um eine ausgebildete Fachperson (d.h. einen "Barista") handelt, kann aber nicht gänzlich ausgeschlossen werden.

Bei den ¾ Automaten (Hybridmaschinen) lässt sich der Siebträger unter Druck aufgrund der radialen Dichtung wesentlich leichter Öffnen und die Wahrscheinlichkeit eines Öffnens ist grundsätzlich höher, da solche Automaten meistens von einer unausgebildeten Person (d.h. von einem "Laien") bedient werden. Neben dem Risiko eines Verbrühens und Verschmutzens des Getränkeausgabebereichs kann bei dieser Bauart auch der Brühkolben und seine Dichtung beschädigt werden, da sich ja zu diesem Zeitpunkt der Brühkolben im Siebträger befindet.

Die EP 3 037 023 A1 offenbart eine Vorrichtung zum Verbinden eines Filterhalters einer Espressomaschine mit der entsprechenden Heißwasserausgabegruppe zum Zubereiten des Getränks, wobei der Filterhalter einen Körper umfasst, der mit einem Griff versehen ist und im Inneren einen Hohlraum aufweist, der durch eine zylindrische Wand begrenzt ist, wobei ein Paar diametral gegenüberliegende Laschen radial von der zylindrischen Wand vorstehen, wobei die Heißwasserausgabegruppe eine Öffnung umfasst, die zum Aufnehmen eines offenen Endes des Hohlraums im Inneren des Körpers des Filterhalters geeignet ist, und ein Paar Führungen umfasst, die spiralförmig um eine Achse verlaufen, die senkrecht zu der Ebene ist, auf der die Verbindung zwischen dem Filterhalter und der Heißwasserausgabegruppe erfolgt und die um die Öffnung herum angeordnet sind und jeweils zum Aufnehmen einer entsprechenden Lasche des Paars der Laschen des Filterhalters durch Bajonettkupplung geeignet sind.

Ausgehend hiervon war es die Aufgabe der vorliegenden Erfindung, eine Siebträgeraufnahme bereitzustellen, welche die Nachteile aus dem Stand der Technik nicht mehr aufweist. Insbesondere sollte es mit der Siebträgeraufnahme möglich sein, ein Herausdrehen des Siebträgers während eines Brühvorgangs zuverlässig zu verhindern und nach einem Brühvorgang ein Entnehmen des Siebträgers und ein Wiedereinsetzen eines Siebträgers nicht zu behindern.

Die Aufgabe wird gelöst durch die Siebträgeraufnahme mit den Merkmalen von Anspruch 1, die Kaffeemaschine mit den Merkmalen von Anspruch 12 und die Verwendung mit den Merkmalen von Anspruch 15. Die abhängigen Ansprüche zeigen vorteilhafte Weiterbildungen bzw. Weiterentwicklungen auf. Erfindungsgemäß wird eine Vorrichtung zur Aufnahme eines zur Druckextraktion von Kaffee geeigneten Siebträgers bereitgestellt, enthaltend
a) eine Aufnahmeeinheit, die dazu geeignet ist, einen zur Druckextraktion von Kaffee geeigneten Siebträger durch eine Drehung des Siebträgers in eine erste Drehrichtung um eine Drehachse des Siebträgers aufzunehmen;
b) einen im Wesentlichen flachen Schaltring, der drehbar auf einem Teil der Aufnahmeeinheit gelagert ist und erste Aussparungen aufweist, die jeweils zur formschlüssigen Aufnahme jeweils eines Nockens eines zur Druckextraktion von Kaffee geeigneten Siebträgers geeignet sind, wobei der Schaltring ein Strukturelement (z.B. eine zweite Aussparung) aufweist;
c) ein bewegliches oder unbewegliches Verriegelungselement,
   dadurch gekennzeichnet, dass
   i) das Verriegelungselement dazu geeignet ist, sich zu dem Strukturelement des Schaltrings hin zu bewegen und von dem Strukturelement des Schaltrings weg zu bewegen, wobei ein an das Strukturelement des Schaltrings hin bewegtes Verriegelungselement dazu geeignet ist, eine Drehung eines in die Aufnahmeeinheit aufgenommenen Siebträgers in eine zweite Drehrichtung um eine Drehachse des Siebträgers, die der ersten Drehrichtung entgegengesetzt ist, zu verhindern; und/oder
   ii) das Strukturelement dazu geeignet ist, sich zu dem Verriegelungselement der Vorrichtung hin zu bewegen und von dem Verriegelungselement der Vorrichtung weg zu bewegen, wobei ein an das Verriegelungselement hin bewegtes Strukturelement dazu geeignet ist, eine Drehung eines in die Aufnahmeeinheit aufgenommenen Siebträgers in eine zweite Drehrichtung um eine Drehachse des Siebträgers, die der ersten Drehrichtung entgegengesetzt ist, zu verhindern.

Die erfindungsgemäße Vorrichtung kann über ihr bewegliches oder unbewegliches Verriegelungselement zusammen mit dem Strukturelement des Schaltrings sicherstellen, dass während eines Brühvorgangs der Siebträger in der Brühposition (Endposition) der Aufnahmeeinheit verweilt und nicht aus der Aufnahmeeinheit herausgedreht werden kann. Es ist damit möglich, ein (beabsichtigtes oder unbeabsichtigtes) Herausdrehen des Siebträgers während eines Brühvorgangs zuverlässig zu verhindern und damit verbundene, mögliche Verletzungen des Benutzers (z.B. Verbrühung), Beschädigungen von Komponenten einer Kaffeemaschine (z.B. eines beweglichen Brühkolbens der Kaffeemaschine) und Verschmutzungen der Umgebung der Kaffeemaschine (z.B. durch druckbedingtes Austreten von Heißwasser und Kaffeemehl) zu vermeiden. Zudem können Ausfallzeiten der Kaffeemaschine vermieden werden, die sich durch eine Beschädigung von Komponenten durch eine Entnahme des Siebträgers während des Brühvorgangs ergeben können. Die Kaffeemaschine kann somit den Brühvorgang ohne Gefahr für den Benutzer, ohne Verschmutzungsgefahr und ohne Gefahr für Komponenten der Kaffeemaschine und damit verbundenen Ausfallzeiten auf sichere Art und Weise abschließen.

Handelt es sich bei der Kaffeemaschine, in der die erfindungsgemäße Vorrichtung enthalten ist, um eine Hybridmaschine mit beweglichem Brühkolben, kann zudem sichergestellt werden, dass die Hybridmaschine den Brühkolben wieder sicher und ohne Verkanten und/oder Beschädigung in seine Endlage, d.h. aus dem Siebträger heraus, bewegen kann. Das bewegliche oder unbewegliche Verriegelungselement zusammen mit dem Strukturelement des Schaltrings ermöglicht es auch, dass nach einem abgeschlossenen Brühvorgang der Siebträger wieder freigegeben wird und über eine Drehbewegung aus der Aufnahmeeinheit der Vorrichtung heraus bewegt werden kann. Dadurch werden nach einem abgeschlossenen Brühvorgang ein Entnehmen des Siebträgers und ein Wiedereinsetzen eines Siebträgers nicht behindert.

Das Strukturelement des Schaltrings kann eine zweite Aussparung des Schaltrings sein. Dabei kann das Verriegelungselement dazu geeignet sein, sich in die zweite Aussparung des Schaltrings hinein und heraus zu bewegen, wobei ein in die zweite Aussparung des Schaltrings hinein bewegtes Verriegelungselement dazu geeignet ist, eine Drehung eines in die Aufnahmeeinheit aufgenommenen Siebträgers in eine zweite Drehrichtung um eine Drehachse des Siebträgers, die der ersten Drehrichtung entgegengesetzt ist, zu verhindern. In dieser Ausführungsform ist somit die Eignung des Verriegelungselements zum Hinbewegen zum Strukturelement des Schaltrings eine Eignung des Verriegelungselements zum Hineinbewegen in eine zweite Aussparung des Schaltrings, und entsprechend die Eignung des Verriegelungselements zum Wegbewegen vom Strukturelement des Schaltrings eine Eignung des Verriegelungselements zum Herausbewegen aus der zweiten Aussparung des Schaltrings. Ferner kann (alternativ oder zusätzlich) der Schaltring dazu geeignet sein, die zweite Aussparung des Schaltrings an das Verriegelungselement hin zu bewegen und vom Verriegelungselement weg zu bewegen, wobei eine an das Verriegelungselement hin bewegte zweite Aussparung dazu geeignet ist, eine Drehung eines in die Aufnahmeeinheit aufgenommenen Siebträgers in eine zweite Drehrichtung um eine Drehachse des Siebträgers, die der ersten Drehrichtung entgegengesetzt ist, zu verhindern.

Alternativ kann das Strukturelement des Schaltrings eine Erhebung des Schaltrings sein. Dabei kann das Verriegelungselement dazu geeignet sein, sich zu der Erhebung des Schaltrings hin (z.B. an die Erhebung des Schaltrings hin) und von der Erhebung des Schaltrings weg zu bewegen, wobei ein zu der Erhebung des Schaltrings hin bewegtes Verriegelungselement dazu geeignet ist, eine Drehung eines in die Aufnahmeeinheit aufgenommenen Siebträgers in eine zweite Drehrichtung um eine Drehachse des Siebträgers, die der ersten Drehrichtung entgegengesetzt ist, zu verhindern. Ferner kann (alternativ oder zusätzlich) die Erhebung dazu geeignet sein, sich zu dem Verriegelungselement hin zu bewegen (z.B. an das Verriegelungselement hin) und vom Verriegelungselement weg zu bewegen, wobei eine zu dem Verriegelungselement hin bewegte Erhebung dazu geeignet ist, eine Drehung eines in die Aufnahmeeinheit aufgenommenen Siebträgers in eine zweite Drehrichtung um eine Drehachse des Siebträgers, die der ersten Drehrichtung entgegengesetzt ist, zu verhindern.

Die Vorrichtung kann ein Steuerelement enthalten, das dazu geeignet ist, nach einer Drehung eines in die Aufnahmeeinheit eingesetzten, zur Druckextraktion von Kaffee geeigneten Siebträgers in eine Endposition, das Verriegelungselement der Vorrichtung und das Strukturelement des Schaltrings aufeinander zu zu bewegen und voneinander weg zu bewegen. Bevorzugt ist das Steuerelement dazu geeignet, nach einer Drehung eines in die Aufnahmeeinheit eingesetzten, zur Druckextraktion von Kaffee geeigneten Siebträgers in eine Endposition, das Verriegelungselement in eine zweite Aussparung des Schaltrings hinein zu bewegen und/oder aus einer zweiten Aussparung des Schaltrings heraus zu bewegen, und/oder das Verriegelungselement zu einer Erhebung des Schaltrings hin zu bewegen und/oder von einer Erhebung des Schaltrings weg zu bewegen. Ferner ist das Steuerelement bevorzugt dazu geeignet, nach einer Drehung eines in die Aufnahmeeinheit eingesetzten, zur Druckextraktion von Kaffee geeigneten Siebträgers in eine Endposition, eine zweite Aussparung des Schaltrings zu dem Verriegelungselement hin zu bewegen und/oder von dem unbeweglichen Verriegelungselement weg zu bewegen, und/oder eine Erhebung des Schaltrings zu dem Verriegelungselement hin zu bewegen und/oder von dem Verriegelungselement weg zu bewegen. Bevorzugt ist das Steuerelement konfiguriert, diese Bewegung (des Verriegelungselements, der zweiten Aussparung des Schaltrings und/oder der Erhebung des Schaltrings) über eine Kraft zu bewirken, die ausgewählt ist aus der Gruppe bestehend aus Kraft eines elektrischen Motors, Kraft einer elektromagnetischen Vorrichtung (bevorzugt eines Hubmagneten), pneumatische Kraft, hydraulische Kraft, magnetische Kraft, Kraft einer Feder und Kombinationen hiervon. Besonders bevorzugt ist das Steuerelement konfiguriert, die Bewegung des Verriegelungselements in eine zweite Aussparung des Schaltrings hinein und/oder zu einer Erhebung des Schaltrings hin, bzw. die Bewegung einer zweiten Aussparung des Schaltrings und/oder einer Erhebung des Schaltrings zu dem Verriegelungselement hin, über eine Kraft einer elektromagnetischen Vorrichtung (bevorzugt eines Hubmagneten) und/oder eine hydraulische Kraft zu bewirken. Besonders bevorzugt ist das Steuerelement konfiguriert, die Bewegung des Verriegelungselements aus der zweiten Aussparung des Schaltrings heraus und/oder von einer Erhebung des Schaltrings weg, bzw. die Bewegung einer zweiten Aussparung des Schaltrings und/oder einer Erhebung des Schaltrings von dem Verriegelungselement weg, über eine Kraft einer Feder zu bewirken.

Das Verriegelungselement und/oder das Strukturelement des Schaltrings kann dazu geeignet sein, über eine Bewegung (z.B. beim Verriegelungselement in die zweite Aussparung hinein und/oder aus der zweiten Aussparung heraus) bewegt zu werden, die ausgewählt ist aus der Gruppe bestehend aus translatorische Bewegung, Drehbewegung, Schwenkbewegung und Kombinationen hiervon. Bevorzugt ist eine Eignung des Verriegelungselements und/oder des Strukturelements des Schaltrings zu einer translatorischen Bewegung, bevorzugt axial entlang einer Hauptachse des Verriegelungselements bzw. des Strukturelements.

Das Verriegelungselement und/oder das Strukturelement des Schaltrings kann eine Struktur enthalten oder daraus bestehen, die ausgewählt ist aus der Gruppe bestehend aus Stift, Hebel, Haken, Bolzen, Riegel, Aussparung und Kombinationen hiervon. Bevorzug enthält das Verriegelungselement einen Stift oder besteht daraus. Das Strukturelement des Schaltrings enthält bevorzugt eine Aussparung ("zweite Aussparung") oder besteht daraus.

Das Verriegelungselement kann eine Länge im Bereich von 5 bis 40 mm, bevorzugt im Bereich von 10 bis 35 mm, besonders bevorzugt im Bereich von 20 bis 30 mm, insbesondere im Bereich von 24 bis 28 mm, aufweisen. Eine Länge in diesem Bereich hat sich als vorteilhaft herausgestellt, das Verriegelungselement sicher in die zweite Aussparung hinein und aus dieser heraus zu bewegen. Das Strukturelement des Schaltrings kann eine Länge aufweisen, die in den genannten Bereichen liegt.

Ferner kann das Verriegelungselement eine Breite (d.h. Abmessung senkrecht zur Länge), bevorzugt einen Durchmesser, besonders bevorzugt einen runden Durchmesser, im Bereich von 2 bis 10 mm, bevorzugt 3 bis 8 mm, besonders bevorzugt 4 bis 6 mm, aufweisen. Eine Breite in diesem Bereich hat sich als vorteilhaft in Bezug auf eine mechanische Belastbarkeit des Verriegelungselements gegenüber einer Drehbewegung des im Wesentlichen flachen Schaltrings herausgestellt. Das Strukturelement des Schaltrings kann eine Breite aufweisen, die in den genannten Bereichen liegt.

Das Verriegelungselement kann eine Feder und/oder zwei Permanentmagnete aufweisen. Der Vorteil an dieser Ausgestaltungsform ist, dass die Feder in einem gestauchten oder gestreckten Zustand bzw. die zwei Permanentmagnete in einem angenäherten Zustand auch ohne Einwirkung von elektrischer Energie eine Kraft ausüben, welche das Verriegelungselement z.B. in die zweite Aussparung des Schaltrings hinein oder aus dieser heraus bewegen kann/können. Folglich kann durch die Verwendung einer Feder und/oder von zwei Permanentmagneten auch ohne elektrischen Strom eine Bewegung des Verriegelungselements veranlasst werden.

Die Feder und/oder zwei Permanentmagnete kann/können dazu geeignet sein, das Verriegelungselement in einer Position zu halten, in welcher das Verriegelungselement aus einer zweiten Aussparung des Schaltrings heraus bewegt ist und/oder von einer Erhebung des Schaltrings weg bewegt ist (z.B. über zwei Permanentmagnete, die sich abstoßen, d.h. bei denen gleiche Pole einander gegenüberliegend angeordnet werden). In diesem Fall kann das Verriegelungselement mit einer Vorrichtung verbunden sein, die dazu geeignet ist, das Verriegelungselement in die zweite Aussparung des Schaltrings hinein zu bewegen und/oder zu der Erhebung des Schaltrings hin zu bewegen. Die Vorrichtung ist besonders bevorzugt ausgewählt aus der Gruppe bestehend aus elektrischer Motor, elektromagnetische Vorrichtung (bevorzugt ein Hubmagnet), pneumatische Vorrichtung, hydraulische Vorrichtung und Kombinationen hiervon. Die hydraulische Vorrichtung kann als fluidische Verbindung von einer Brühleitung zum Verriegelungselement ausgestaltet sein. In diesem Fall kann Brühwasser der Brühleitung, das unter Druck steht (z.B. ca. 10 bar) einen Druck auf eine Fläche des Verriegelungselements (z.B. eine Fläche eines Bolzens) ausüben und diesen aufgrund der auf den Bolzen wirkenden Kraft in die zweite Aussparung des Schaltrings hinein bewegen. Die Kraft, mit welcher das Verriegelungselement in die zweite Aussparung des Schaltrings hinein bewegt wird, ergibt sich dann aus dem Produkt aus dem hydraulischen Druck in der Brühleitung und der Fläche des Bolzens, auf den der hydraulische Druck wirkt, d.h. es gilt: F [N]= p [N/mm²] · A [mm²], wobei "F" die Kraft ist, "p" der hydraulische Druck ist und "A" die Fläche des Verriegelungselements ist, auf welche der hydraulische Druck einwirkt.

Alternativ kann/können die Feder und/oder die zwei Permanentmagneten dazu geeignet sein, das Verriegelungselement in einer Position zu halten, in welcher das Verriegelungselement in eine zweite Aussparung des Schaltrings hinein bewegt ist und/oder zu einer Erhebung des Schaltrings hin bewegt ist (z.B. über zwei Permanentmagnete, die sich anziehen, d.h. bei denen entgegengesetzte Pole einander gegenüberliegend angeordnet werden). In diesem Fall kann das Verriegelungselement mit einer Vorrichtung verbunden sein, die dazu geeignet ist, das Verriegelungselement aus der zweiten Aussparung des Schaltrings heraus zu bewegen und/oder von der Erhebung des Schaltrings weg zu bewegen. Die Vorrichtung ist besonders bevorzugt ausgewählt aus der Gruppe bestehend aus elektrischer Motor, elektromagnetische Vorrichtung (bevorzugt ein Hubmagnet), pneumatische Vorrichtung, hydraulische Vorrichtung und Kombinationen hiervon.

Ferner kann das Strukturelement des Schaltrings eine Feder und/oder zwei Permanentmagneten aufweisen. Der Vorteil an dieser Ausgestaltungsform ist, dass die Feder in einem gestauchten oder gestreckten Zustand bzw. die zwei Permanentmagnete in einem angenäherten Zustand auch ohne Einwirkung von elektrischer Energie eine Kraft ausüben, welche das Strukturelement zu dem Verriegelungselement der Vorrichtung hin bewegen kann. Folglich kann durch die Verwendung einer Feder und/oder von zwei Permanentmagneten auch ohne elektrischen Strom eine Bewegung des Strukturelements des Schaltrings veranlasst werden.

Die Feder und/oder zwei Permanentmagnete kann/können dazu geeignet sein, das Strukturelement in einer Position zu halten, in welcher das Strukturelement von dem Verriegelungselement weg bewegt ist (z.B. über zwei Permanentmagnete, die sich abstoßen, d.h. bei denen gleiche Pole einander gegenüberliegend angeordnet werden). In diesem Fall kann das Strukturelement mit einer Vorrichtung verbunden sein, die dazu geeignet ist, das Strukturelement zu dem Verriegelungselement hin zu bewegen. Die Vorrichtung ist besonders bevorzugt ausgewählt aus der Gruppe bestehend aus elektrischer Motor, elektromagnetische Vorrichtung, pneumatische Vorrichtung, hydraulische Vorrichtung und Kombinationen hiervon. Die hydraulische Vorrichtung kann als fluidische Verbindung von einer Brühleitung zum Strukturelement des Schaltrings ausgestaltet sein. In diesem Fall kann Brühwasser der Brühleitung, das unter Druck steht (z.B. ca. 10 bar) einen Druck auf eine Fläche des Strukturelements (z.B. eine Fläche eines Bolzens) ausüben und diesen aufgrund der auf den Bolzen wirkenden Kraft zu dem Verriegelungselement hin bewegen.

Alternativ kann/können die Feder und/oder die zwei Permanentmagneten dazu geeignet sein, das Strukturelement in einer Position zu halten, in welcher das Strukturelement zu dem Verriegelungselement hin bewegt ist (z.B. über zwei Permanentmagnete, die sich anziehen, d.h. bei denen entgegengesetzte Pole einander gegenüberliegend angeordnet werden). In diesem Fall kann das Strukturelement mit einer Vorrichtung verbunden sein, die dazu geeignet ist, das Strukturelement von dem Verriegelungselement weg zu bewegen. Die Vorrichtung ist besonders bevorzugt ausgewählt ist aus der Gruppe bestehend aus elektrischer Motor, elektromagnetische Vorrichtung, pneumatische Vorrichtung, hydraulische Vorrichtung und Kombinationen hiervon.

Die Vorrichtung kann einen Schaltring enthalten, der einen Lagerbock aufweist (d.h. der Schaltring der erfindungsgemäßen Vorrichtung kann einen Lagerbock aufweisen), wobei der Lagerbock ein beweglich auf dem Lagerbock gelagertes Kugellager und mindestens eine Feder aufweist, wobei der Lagerbock über die mindestens eine Feder mit dem Schaltring verbunden ist. In dieser Ausgestaltungsform enthält die Vorrichtung ferner eine Kulisse, die dem Lagerbock des Schaltrings gegenüberliegend angeordnet ist und eine im Wesentlichen kreisförmig gebogene Oberfläche aufweist, wobei die mindestens eine Feder des Lagerbocks den Lagerbock und über den Lagerbock das Kugellager des Lagerbocks (genauer: einen Teil einer Außenoberfläche des Kugellagers) gegen die im Wesentlichen kreisförmig gebogene Oberfläche der Kulisse der Vorrichtung drückt.

In einer bevorzugten Ausgestaltungsform weist die Kulisse eine erste Rampe auf, die sich in Richtung Lagerblock erstreckt. Die erste Rampe ist bevorzugt in Richtung der ersten Drehrichtung neben einer Anfangsposition eines in die Aufnahmeeinheit der Vorrichtung eingesetzten, zur Druckextraktion von Kaffee geeigneten Siebträgers an der Kulisse angeordnet. Diese erste Rampe hat den Vorteil, dass das Kugellager des Lagerbocks, das durch die Kraft der mindestens einen Feder auf das Kugellager gegen die Oberfläche der Kulisse gedrückt wird, bei einer Drehbewegung des Siebträgers von einer Anfangsposition des Siebträgers (Einsetzposition in die Aufnahmeeinheit der Vorrichtung) in Richtung Endposition (Bezugsposition von Kaffee, wenn die Vorrichtung in einer Kaffeemaschine verbaut ist) zunächst die erste Rampe passieren muss, wodurch die mindestens eine Feder des Lagerbocks stärker eingedrückt wird als in der Anfangsposition des Siebträgers. Einerseits bekommt der Benutzer damit durch einen leichten Widerstand beim Einleiten der Drehbewegung von der Anfangsposition in Richtung Endposition des Siebträgers (erste Drehrichtung) eine haptische Rückkopplung, dass der Siebträger nun nicht mehr in der Anfangsposition ist und sich in Richtung Endposition bewegt. Andererseits bekommt der Benutzer beim Einleiten der umgekehrten Drehbewegung (zweite Drehrichtung) eine haptische Rückkopplung, dass der Siebträger in der Anfangsposition angekommen ist. Ferner wird die Bewegung des Siebträgers bei der zweiten Drehrichtung zur Anfangsposition unterstützt und der Siebträger wird durch die Bewegung des Kugellagers runter von der ersten Rampe in Richtung Anfangsposition gezielt in die Anfangsposition bewegt und dort "gehalten".

Die erste Rampe kann eine Höhe von 1 bis 4 mm, bevorzugt 1,5 bis 3,5 mm, besonders bevorzugt 2 bis 3 mm, insbesondere 2,5 mm, in Bezug zu einer Oberfläche der Kulisse aufweisen, die dem Kugellager des Lagerbocks (genauer: einem Teil einer Außenoberfläche des Kugellagers) in einer Anfangsposition eines in die Aufnahmeeinheit der Vorrichtung eingesetzten, zur Druckextraktion von Kaffee geeigneten Siebträgers gegenüberliegt. Diese Höhe hat sich in Verbindung mit einer Kraft einer Feder im Bereich von 20 bis 40 N als vorteilhaft erwiesen, dem Benutzer eine ausreichend große haptische Rücckopplung zu geben und dem Benutzer bei der Bewegung des Siebträgers in die Anfangsposition zu assistieren.

Ferner kann die erste Rampe eine Länge von 20 bis 60 mm, bevorzugt 30 bis 50 mm, besonders bevorzugt 35 bis 45 mm, insbesondere 40 mm, in die erste Drehrichtung aufweisen.

In einer weiteren bevorzugten Ausgestaltungsform weist die Kulisse eine zweite Rampe auf, die sich in Richtung Lagerblock erstreckt. Die zweite Rampe ist bevorzugt in Richtung der zweiten Drehrichtung neben einer Endposition eines in die Aufnahmeeinheit der Vorrichtung eingesetzten, zur Druckextraktion von Kaffee geeigneten Siebträgers an der Kulisse angeordnet. Die zweite Rampe schließt sich bevorzugt in der ersten Drehrichtung an die erste Rampe an, d.h. erhebt sich von der ersten Rampe. Diese zweite Rampe hat den Vorteil, dass das Kugellager des Lagerbocks, das durch die Kraft der mindestens einen Feder auf das Kugellager gegen die Oberfläche der Kulisse gedrückt wird, bei einer Drehbewegung des Siebträgers hin zu einer Endposition des Siebträgers (Bezugsposition von Kaffee, wenn die Vorrichtung in einer Kaffeemaschine verbaut ist) die zweite Rampe passieren muss, wodurch die mindestens eine Feder des Lagerbocks stärker eingedrückt wird als in der Anfangsposition des Siebträgers und bevorzugt stärker eingedrückt wird als auf einer ersten Rampe der Kulisse. Einerseits bekommt der Benutzer damit durch einen stärkeren Widerstand beim Einleiten der Drehbewegung in Richtung Endposition des Siebträgers (erste Drehrichtung) eine haptische Rückkopplung, dass sich der Siebträger in die Endposition bewegt. Andererseits bekommt der Benutzer beim Einleiten der umgekehrten Drehbewegung (zweite Drehrichtung) durch einen gleich starken Widerstand (d.h. einen Widerstand, der gleich groß ist wie der Widerstand, den die zweite Rampe in die erste Drehrichtung bereitstellt) eine haptische Rückkopplung, dass der Siebträger aus der Endposition herausbewegt wird. Zudem wird die Bewegung des Siebträgers bei der ersten Drehrichtung in Richtung Endposition unterstützt und der Siebträger wird durch die Bewegung des Kugellagers runter von der zweiten Rampe in Richtung Endposition gezielt in die Endposition bewegt und dort "gehalten".

Die zweite Rampe kann eine Höhe von 3,5 bis 6,5 mm, bevorzugt 4 bis 6 mm, besonders bevorzugt 4,5 bis 5,5 mm, insbesondere 5 mm, in Bezug zu einer Oberfläche der Kulisse aufweisen, die dem Kugellager des Lagerbocks (genauer: einem Teil einer Außenoberfläche des Kugellagers) in einer Endposition eines in die Aufnahmeeinheit der Vorrichtung eingesetzten, zur Druckextraktion von Kaffee geeigneten Siebträgers gegenüberliegt. Diese Höhe hat sich in Verbindung mit einer Kraft einer Feder im Bereich von 25 bis 45 N als vorteilhaft erwiesen, dem Benutzer eine ausreichend große haptische Rückkopplung zu geben und dem Benutzer bei der Bewegung des Siebträgers in die Endposition zu assistieren. Ferner stellt die zweite Rampe neben dem Verriegelungselement, das in die zweite Aussparung des Schaltrings hinein bewegt wurde, einen zusätzlichen Widerstand bereit, der eine Drehbewegung des Siebträgers aus der Endposition in Richtung Anfangsposition (zweite Drehrichtung) erschwert, wodurch eine mechanische Belastung auf das Verriegelungselement im Falle einer solchen, von einem Benutzer (absichtlich oder unabsichtlich) eingeleiteten Drehbewegung geringer ausfällt.

In Bezug zu einer Oberfläche der ersten Rampe kann die zweite Rampe eine Höhe von 1 bis 4 mm, bevorzugt 1,5 bis 3,5 mm, besonders bevorzugt 2 bis 3 mm, insbesondere 2,5 mm, aufweisen.

Ferner kann die zweite Rampe eine Länge von 5 bis 35 mm, bevorzugt 10 bis 30 mm, besonders bevorzugt 15 bis 25 mm, insbesondere 20 mm, in die erste Drehrichtung aufweisen.

Die Vorrichtung kann einen Mikroschalter aufweisen, der dazu geeignet ist, in einer Endposition eines in die Aufnahmeeinheit eingesetzten, zur Druckextraktion von Kaffee geeigneten Siebträgers von dem Schaltring der Vorrichtung betätigt zu werden. Ferner kann der Mikroschalter dazu geeignet sein, in einer anderen Position als der Endposition eines in die Aufnahmeeinheit eingesetzten, zur Druckextraktion von Kaffee geeigneten Siebträgers von dem Schaltring der Vorrichtung nicht betätigt zu werden, wobei sich die andere Position bevorzugt in der zweiten Drehrichtung von einer Endposition eines in die Aufnahmeeinheit eingesetzten, zur Druckextraktion von Kaffee geeigneten Siebträgers befindet. Diese Ausgestaltungsform hat den Vorteil, dass einer Kaffeemaschine, welche die erfindungsgemäße Vorrichtung enthält, signalisiert werden kann, wenn sich der Siebträger in seiner Endposition befindet und der Kaffeebezug gestartet werden kann.

Der im Wesentlichen flache Schaltring kann mindestens zwei, bevorzugt mindestens drei, optional mindestens vier, erste Aussparungen aufweisen, die jeweils zur formschlüssigen Aufnahme jeweils eines Nockens eines zur Druckextraktion von Kaffee geeigneten Siebträgers geeignet sind. Es ist beispielsweise möglich, dass der im Wesentlichen flache Schaltring genau zwei, genau drei oder genau vier, erste Aussparungen aufweist, die jeweils zur formschlüssigen Aufnahme jeweils eines Nockens eines zur Druckextraktion von Kaffee geeigneten Siebträgers geeignet sind.

Die Aufnahmeeinheit der Vorrichtung kann einen ersten Anschlag und einen zweiten Anschlag aufweisen. Der erste und/oder zweite Anschlag ist bevorzugt auf einem Teil der Aufnahmeeinheit, besonders bevorzugt auf einem unteren Teil der Aufnahmeeinheit, angeordnet.

Bevorzugt ist der erste Anschlag in einer zweiten Aussparung des Schaltrings angeordnet oder in Richtung der zweiten Drehrichtung neben einer Erhebung des Schaltrings angeordnet ohne sich in eine zweite Aussparung des Schaltrings zu erstrecken, kontaktiert den Schaltring in einer Anfangsposition eines in die Aufnahmeeinheit der Vorrichtung eingesetzten, zur Druckextraktion von Kaffee geeigneten Siebträgers (insbesondere an einer Oberfläche des Schaltrings, die sich von einem Zentrum des Schaltrings nach außen erstreckt) und ist ausgestaltet, eine Bewegung des Schaltrings von der Anfangsposition in die zweite Drehrichtung (z.B. Drehung im Uhrzeigersinn) zu verhindern.

Bevorzugt ist der zweite Anschlag in einer weiteren Aussparung des Schaltrings angeordnet oder in Richtung der ersten Drehrichtung neben einer weiteren Erhebung des Schaltrings angeordnet ohne sich in eine zweite Aussparung des Schaltrings zu erstrecken, kontaktiert den Schaltring in einer Endposition eines in die Aufnahmeeinheit der Vorrichtung eingesetzten, zur Druckextraktion von Kaffee geeigneten Siebträgers (insbesondere an einer Oberfläche des Schaltrings, die sich von einem Zentrum des Schaltrings nach außen erstreckt) und ist ausgestaltet, eine Bewegung des Schaltrings von der Endposition in die erste Drehrichtung (z.B. Drehung gegen den Uhrzeigersinn) zu verhindern.

Erfindungsgemäß wird ferner eine Kaffeemaschine bereitgestellt, welche die erfindungsgemäße Vorrichtung und eine Steuereinheit enthält.

Die Kaffeemaschine kann eine erfindungsgemäße Vorrichtung enthalten, die ein Steuerelement enthält (siehe oben), wobei die Steuereinheit der Kaffeemaschine konfiguriert sein kann, das Steuerelement der Vorrichtung zu steuern.

Bevorzugt ist die Steuereinheit der Kaffeemaschine konfiguriert, zu veranlassen, dass das Verriegelungselement der Vorrichtung und das Strukturelement des Schaltrings aufeinander zu bewegt werden und/oder voneinander weg bewegt werden.

Die Steuereinheit der Kaffeemaschine ist besonders bevorzugt konfiguriert, zu veranlassen, dass das Verriegelungselement in eine zweite Aussparung des Schaltrings hinein bewegt wird und/oder zu einer Erhebung des Schaltrings hin bewegt wird, wenn ein in die Aufnahmeeinheit eingesetzter, zur Druckextraktion von Kaffee geeigneter Siebträger in einer Endposition in der Aufnahmeeinheit angeordnet wurde und noch kein Kaffee bezogen wurde (z.B. bevor ein Spindelantrieb eines Brühkolbens der Kaffeemaschine aktiviert und der Brühkolben in den Siebträger eingefahren ist). Der Begriff "wenn noch kein Kaffee bezogen wurde" kann folgendes bedeuten: Die Steuereinheit der Kaffeemaschine ist konfiguriert zu veranlassen, dass das Verriegelungselement in eine zweite Aussparung des Schaltrings hineinbewegt wird und/oder zu einer Erhebung des Schaltrings hin bewegt wird, gleich nachdem ein in die Aufnahmeeinheit eingesetzter, zur Druckextraktion von Kaffee geeigneter Siebträger in einer Endposition in der Aufnahmeeinheit angeordnet wurde. Der Begriff "wenn noch kein Kaffee bezogen wurde" kann auch folgendes bedeuten: Die Steuereinheit der Kaffeemaschine ist konfiguriert zu veranlassen, dass das Verriegelungselement in eine zweite Aussparung des Schaltrings hineinbewegt wird und/oder zu einer Erhebung des Schaltrings hin bewegt wird, nachdem ein in die Aufnahmeeinheit eingesetzter, zur Druckextraktion von Kaffee geeigneter Siebträger in einer Endposition in der Aufnahmeeinheit angeordnet wurde und nachdem der Kaffeemaschine über eine Eingabeeinrichtung der Kaffeemaschine von einem Benutzer ein Signal zur Zubereitung eines Getränks gegeben wurde. Letztere Bedeutung bzw. Konfiguration der Steuereinheit ist bevorzugt. Die Steuereinheit der Kaffeemaschine ist besonders bevorzugt konfiguriert, zur Bewegung des Verriegelungselements ein Steuerelement bzw. eine Vorrichtung zu steuern, das/die ausgewählt ist aus der Gruppe bestehend aus elektrischer Motor, elektromagnetische Vorrichtung (z.B. ein Hubmagnet), pneumatische Vorrichtung, hydraulische Vorrichtung und Kombinationen hiervon. Beispielsweise kann die Steuereinheit konfiguriert sein, eine elektromagnetische Vorrichtung (z.B. einen Hubmagneten) zu aktivieren, um das Verriegelungselement in eine zweite Aussparung hinein zu bewegen und/oder zu einer Erhebung des Schaltrings hin zu bewegen. Eine solche Konfiguration kann beispielsweise vorliegen, wenn auf das Verriegelungselement eine magnetische Kraft (z.B. eine Kraft von Permanentmagneten mit gleichen, gegenüberliegenden Polen) wirkt, die ohne ein Einwirken einer Kraft der elektromagnetischen Vorrichtung dazu geeignet ist, das Verriegelungselement aus einer zweiten Aussparung des Schaltrings heraus zu bewegen bzw. heraus zu halten und/oder von einer Erhebung des Schaltrings weg zu bewegen bzw. weg zu halten.

Ferner ist die Steuereinheit der Kaffeemaschine bevorzugt konfiguriert, zu veranlassen, dass das Verriegelungselement aus einer zweiten Aussparung des Schaltrings heraus bewegt wird und/oder von einer Erhebung des Schaltrings weg bewegt wird, wenn ein in die Aufnahmeeinheit eingesetzter, zur Druckextraktion von Kaffee geeigneter Siebträger in einer Endposition in der Aufnahmeeinheit angeordnet ist und bereits ein Kaffee bezogen wurde (z.B. wenn ein Brühkolben der Kaffeemaschine in den Siebträger eingefahren ist und ein Spindelantrieb des Brühkolbens deaktiviert ist), wobei die Steuereinheit der Kaffeemaschine besonders bevorzugt konfiguriert ist, hierfür ein Steuerelement bzw. eine Vorrichtung zu steuern, das/die ausgewählt ist aus der Gruppe bestehend aus elektrischer Motor, elektromagnetische Vorrichtung (z.B. ein Hubmagnet), pneumatische Vorrichtung, hydraulische Vorrichtung und Kombinationen hiervon. Beispielsweise kann die Steuereinheit konfiguriert sein, eine elektromagnetische Vorrichtung (z.B. einen Hubmagneten) zu deaktivieren, um das Verriegelungselement aus einer zweiten Aussparung heraus zu bewegen und/oder von einer Erhebung des Schaltrings weg zu bewegen. Eine solche Konfiguration kann beispielsweise vorliegen, wenn auf das Verriegelungselement eine magnetische Kraft (z.B. eine Kraft von Permanentmagneten mit gleichen, gegenüberliegenden Polen) wirkt, die ohne ein Einwirken einer Kraft der elektromagnetischen Vorrichtung dazu geeignet ist, das Verriegelungselement aus einer zweiten Aussparung des Schaltrings heraus zu bewegen bzw. heraus zu halten und/oder von einer Erhebung des Schaltrings weg zu bewegen bzw. weg zu halten. Alternativ kann die Steuereinheit beispielsweise konfiguriert sein, eine elektromagnetische Vorrichtung (z.B. einen Hubmagneten) zu aktivieren, um das Verriegelungselement aus einer zweiten Aussparung heraus zu bewegen und/oder von einer Erhebung des Schaltrings weg zu bewegen. Eine solche Konfiguration kann beispielsweise vorliegen, wenn auf das Verriegelungselement eine magnetische Kraft (z.B. eine Kraft von Permanentmagneten mit gegensätzlichen Polen) wirkt, die ohne ein Einwirken einer Kraft der elektromagnetischen Vorrichtung dazu geeignet ist, das Verriegelungselement in eine zweite Aussparung des Schaltrings hinein zu bewegen bzw. in dieser zu halten und/oder von einer Erhebung des Schaltrings weg zu bewegen bzw. weg zu halten.

Abgesehen davon kann die Steuereinheit der Kaffeemaschine konfiguriert sein, zu veranlassen, dass das Strukturelement des Schaltrings zu dem Verriegelungselement hin bewegt wird, wenn ein in die Aufnahmeeinheit eingesetzter, zur Druckextraktion von Kaffee geeigneter Siebträger in einer Endposition in der Aufnahmeeinheit angeordnet wurde und noch kein Kaffee bezogen wurde. Besonders bevorzugt ist die Steuereinheit der Kaffeemaschine konfiguriert, hierfür eine Vorrichtung zu steuern, die ausgewählt ist aus der Gruppe bestehend aus elektrischer Motor, elektromagnetische Vorrichtung, pneumatische Vorrichtung, hydraulische Vorrichtung und Kombinationen hiervon.

Darüber hinaus kann die Steuereinheit der Kaffeemaschine konfiguriert sein, zu veranlassen, dass das Strukturelement des Schaltrings von dem Verriegelungselement weg bewegt wird, wenn ein in die Aufnahmeeinheit eingesetzter, zur Druckextraktion von Kaffee geeigneter Siebträger in einer Endposition in der Aufnahmeeinheit angeordnet ist und bereits ein Kaffee bezogen wurde. Besonders bevorzugt ist die Steuereinheit der Kaffeemaschine konfiguriert ist, hierfür eine Vorrichtung zu steuern, die ausgewählt ist aus der Gruppe bestehend aus elektrischer Motor, elektromagnetische Vorrichtung, pneumatische Vorrichtung, hydraulische Vorrichtung und Kombinationen hiervon.

Die Kaffeemaschine kann eine erfindungsgemäße Vorrichtung enthalten, die einen Mikroschalter enthält (siehe oben), wobei die Steuereinheit der Kaffeemaschine konfiguriert sein kann, Signale des Mikroschalters der Vorrichtung zu empfangen.

Bevorzugt ist die Steuereinheit der Kaffeemaschine konfiguriert, wenn vom Mikroschalter ein Betätigungssignal empfangen wird und noch kein Bezug von einem Kaffee erfolgt ist, auf einer Anzeigeeinrichtung der Kaffeemaschine eine dem eingesetzten Siebträger entsprechende Auswahl an Getränken anzuzeigen.

Ferner kann die Steuereinheit der Kaffeemaschine konfiguriert sein, wenn vom Mikroschalter ein Betätigungssignal empfangen wird und noch kein Bezug von einem Kaffee erfolgt ist, das Verriegelungselement der Vorrichtung zu dem Strukturelement des Schaltrings hin zu bewegen und/oder das Strukturelement des Schaltrings zu dem Verriegelungselement der Vorrichtung hin zu bewegen, bevorzugt das Verriegelungselement in eine zweite Aussparung des Schaltrings hinein zu bewegen, das Verriegelungselement zu einer Erhebung des Schaltrings hin zu bewegen, eine zweite Aussparung des Schaltrings zu dem Verriegelungselement hin zu bewegen und/oder eine Erhebung des Schaltrings zu dem Verriegelungselement hin zu bewegen. besonders bevorzugt anschließend einen Kaffeebezug, insbesondere einen Spindelantrieb eines Brühkolbens der Kaffeemaschine, freizugeben.

Alternativ kann die Steuereinheit der Kaffeemaschine konfiguriert sein, wenn vom Mikroschalter ein Betätigungssignal empfangen wird, noch kein Bezug von einem Kaffee erfolgt ist und der Kaffeemaschine über eine Eingabeeinrichtung der Kaffeemaschine von einem Benutzer ein Signal zur Zubereitung eines Getränks gegeben wird, das Verriegelungselement der Vorrichtung zu dem Strukturelement des Schaltrings hin zu bewegen und/oder das Strukturelement des Schaltrings zu dem Verriegelungselement der Vorrichtung hin zu bewegen, bevorzugt das Verriegelungselement in eine zweite Aussparung des Schaltrings hinein zu bewegen, das Verriegelungselement zu einer Erhebung des Schaltrings hin zu bewegen, eine zweite Aussparung des Schaltrings zu dem Verriegelungselement hin zu bewegen und/oder eine Erhebung des Schaltrings zu dem Verriegelungselement hin zu bewegen, besonders bevorzugt anschließend einen Kaffeebezug, insbesondere einen Spindelantrieb eines Brühkolbens der Kaffeemaschine, freizugeben. Diese Alternative hat den Vorteil, dass ein Benutzer der Kaffeemaschine den Siebträger noch vor Zubereitung eines Getränks ohne weitere Maßnahmen wieder aus der Kaffeemaschine entfernen kann, beispielsweise wenn er realisiert, dass ein falscher Siebträger eingesetzt wurde (z.B. Siebträger mit zu geringem Fassungsvermögen für ein gewünschtes Getränk). Kurz gesagt wird der Siebträger bei dieser Alternative erst in der Endposition (Bezugsposition) fixiert, wenn ein Benutzer der Kaffeemaschine ein Signal zur Zubereitung eines Getränks gegeben hat.

Abgesehen davon kann die Steuereinheit der Kaffeemaschine konfiguriert sein, wenn vom Mikroschalter ein Betätigungssignal empfangen wird und ein Bezug von einem Kaffee abgeschlossen ist, das Verriegelungselement der Vorrichtung von dem Strukturelement des Schaltrings weg zu bewegen und/oder das Strukturelement des Schaltrings von dem Verriegelungselement der Vorrichtung weg zu bewegen, bevorzugt das Verriegelungselement aus einer zweiten Aussparung des Schaltrings heraus zu bewegen, das Verriegelungselement von einer Erhebung des Schaltrings weg zu bewegen, eine zweite Aussparung des Schaltrings von dem Verriegelungselement weg zu bewegen und/oder eine Erhebung des Schaltrings von dem Verriegelungselement weg zu bewegen.

Ferner ist die Steuereinheit der Kaffeemaschine bevorzugt konfiguriert, wenn vom Mikroschalter kein Betätigungssignal empfangen wird, einen Kaffeebezug, insbesondere einen Spindelantrieb eines Brühkolbens der Kaffeemaschine, zu blockieren.

Die Kaffeemaschine kann ein Kaffee-Halbautomat (alternative Bezeichnung: Espressomaschine oder Siebträgermaschine) oder eine Kaffee-Hybridmaschine (alternative Bezeichnung: ¾ Automat) sein.

Erfindungsgemäß wird ferner die Verwendung der erfindungsgemäßen Vorrichtung in einer Kaffeemaschine, bevorzugt in einem Kaffee-Halbautomat oder einer Kaffee-Hybridmaschine, vorgeschlagen.

Anhand der nachfolgenden Figuren soll der erfindungsgemäße Gegenstand näher erläutert werden, ohne diesen auf die hier gezeigten, spezifischen Ausführungsformen einschränken zu wollen.

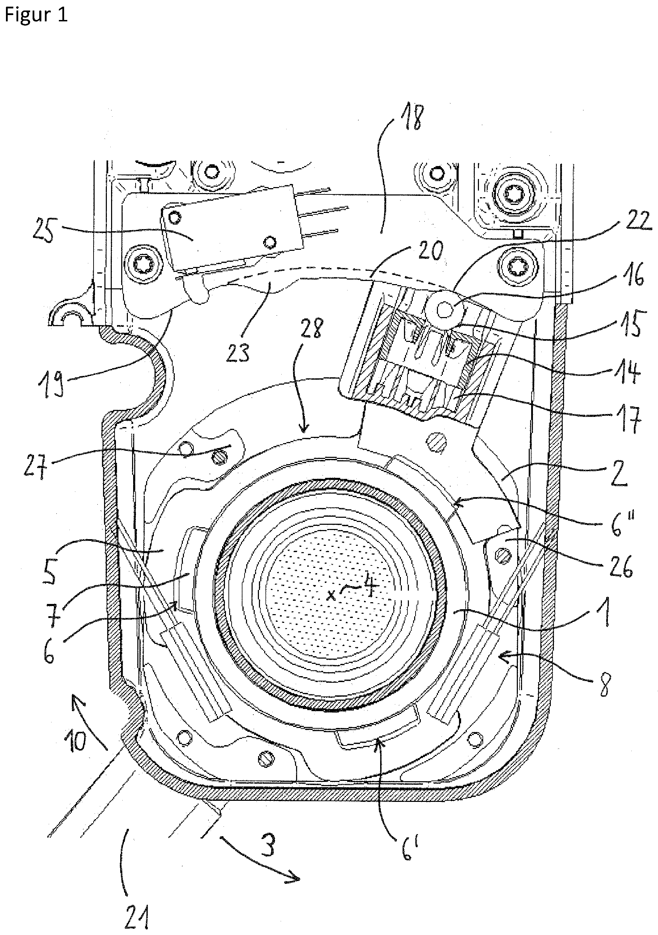

Figuren 1 bis 3 zeigen schematisch eine erfindungsgemäße Vorrichtung zur Aufnahme eines zur Druckextraktion von Kaffee geeigneten Siebträgers 1 in der Draufsicht (von oben). Die Vorrichtung enthält eine Aufnahmeeinheit 2, 2' (hier mit einem unteren Teil 2' und einem oberen Teil 2), die dazu geeignet ist, einen zur Druckextraktion von Kaffee geeigneten Siebträger 1 durch eine Drehung des Siebträgers 1 in eine erste Drehrichtung 3 um eine Drehachse 4 des Siebträgers aufzunehmen. Ferner enthält die Vorrichtung einen im Wesentlichen flachen Schaltring 5, der drehbar auf einem unteren Teil 2' der Aufnahmeeinheit 2, 2' gelagert ist und erste Aussparungen 6, 6', 6" aufweist, die jeweils zur formschlüssigen Aufnahme jeweils eines Nockens 7 eines zur Druckextraktion von Kaffee geeigneten Siebträgers 1 geeignet sind. Ferner weist der Schaltring 5 hier als Strukturelement eine zweite Aussparung 8 auf, wobei die Vorrichtung hier ein bewegliches Verriegelungselement 9 enthält, das dazu geeignet ist, sich in die zweite Aussparung 8 des Schaltrings 5 hinein und heraus zu bewegen, wobei ein in die zweite Aussparung 8 des Schaltrings 5 hinein bewegtes Verriegelungselement 9 bewirkt, dass eine Drehung eines in die Aufnahmeeinheit 2, 2' aufgenommenen Siebträgers 1 in eine zweite Drehrichtung 10 um eine Drehachse 4 des Siebträgers, die der ersten Drehrichtung 3 entgegengesetzt ist, verhindert wird.

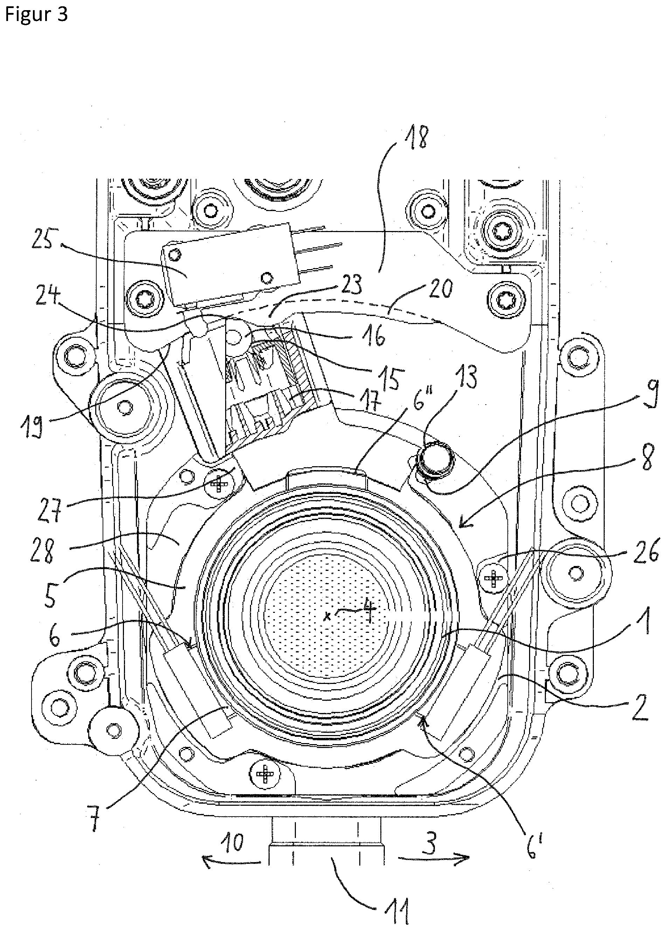

In der dargestellten Ausgestaltungsform der Vorrichtung weist der Schaltring 5 ferner einen Lagerbock 14 auf, wobei der Lagerbock 14 ein (über einen Stift des Lagerbocks 14) beweglich auf dem Lagerbock 14 gelagertes Kugellager 16 und ferner mindestens eine Feder 17 aufweist, wobei der Lagerbock 14 über die mindestens eine Feder 17 mit dem Schaltring 5 verbunden ist. Ferner enthält die Vorrichtung in dieser Ausgestaltungsform eine Kulisse 18, die dem Lagerbock 14 des Schaltrings 5 gegenüberliegend angeordnet ist und eine im Wesentlichen kreisförmig gebogene Oberfläche 19 aufweist, wobei die mindestens eine Feder 17 des Lagerbocks 14, die mit dem Schaltring 5 verbunden ist, den Lagerbock 14 und über den Lagerbock 14 das Kugellager 15 des Lagerbocks 14 (genauer: einen Teil einer Außenoberfläche 15 des Kugellagers 15) gegen die im Wesentlichen kreisförmig gebogene Oberfläche 19 der Kulisse 18 der Vorrichtung drückt. Die Kulisse 18 weist eine erste Rampe 20 auf, die sich in Richtung Lagerblock 14 erstreckt, wobei die erste Rampe 20 in Richtung der ersten Drehrichtung 3 neben einer Anfangsposition 21 eines in die Aufnahmeeinheit der Vorrichtung eingesetzten, zur Druckextraktion von Kaffee geeigneten Siebträgers 1 an der Kulisse 18 angeordnet ist (siehe z.B. Figur 1). Ferner weist die Kulisse 18 eine zweite Rampe 23 auf, die sich in Richtung Lagerblock 14 erstreckt, wobei die zweite Rampe 23 in Richtung der zweiten Drehrichtung 10 neben einer Endposition 11 eines in die Aufnahmeeinheit der Vorrichtung eingesetzten, zur Druckextraktion von Kaffee geeigneten Siebträgers 1 an der Kulisse 18 angeordnet ist (siehe z.B. Figur 3).

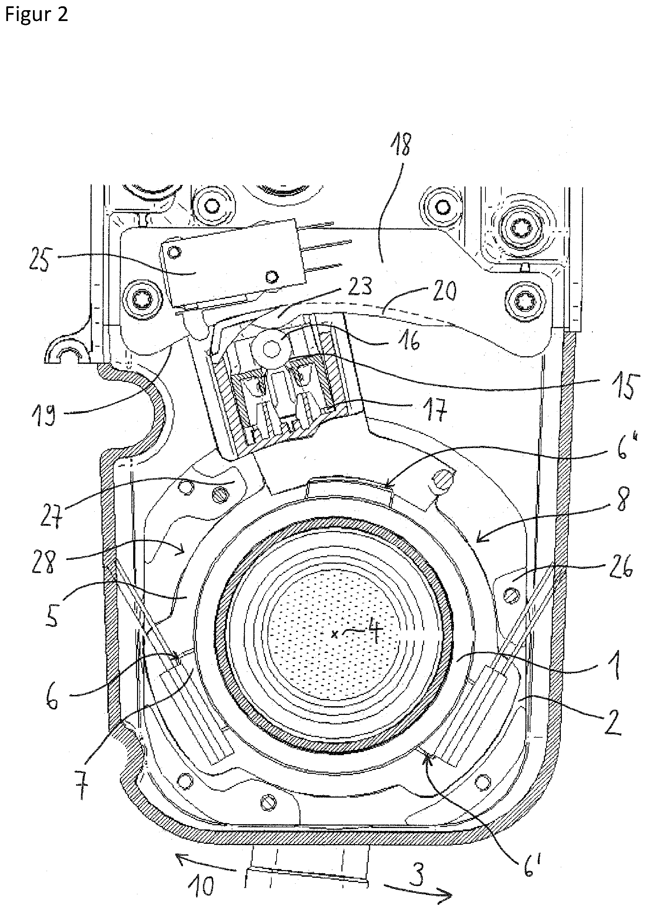

In der dargestellten Ausgestaltungsform weist die Vorrichtung zudem einen Mikroschalter 25 auf, der dazu geeignet ist, in einer Endposition 11 eines in die Aufnahmeeinheit eingesetzten, zur Druckextraktion von Kaffee geeigneten Siebträgers 1 von dem Schaltring 5 der Vorrichtung betätigt zu werden (Situation in Figur 3) und in einer anderen Position als der Endposition 11 eines in die Aufnahmeeinheit eingesetzten, zur Druckextraktion von Kaffee geeigneten Siebträgers 1 von dem Schaltring 5 der Vorrichtung nicht betätigt zu werden (Situation in Figuren 1 und 2).

In der dargestellten Ausgestaltungsform weist der untere Teil 2' der Aufnahmeeinheit 2, 2' der Vorrichtung ferner einen ersten Anschlag 26 und einen zweiten Anschlag 27 auf. Der erste Anschlag 26 ist in der zweiten Aussparung 8 des Schaltrings 5 angeordnet, kontaktiert den Schaltring 5 an einer Oberfläche des Schaltrings, die sich von einem Zentrum des Schaltrings nach außen erstreckt, in einer Anfangsposition 21 eines in die Aufnahmeeinheit der Vorrichtung eingesetzten, zur Druckextraktion von Kaffee geeigneten Siebträgers 1 (d.h. stößt an diese Oberfläche des Schaltrings an; siehe Figur 1) und ist ausgestaltet, eine Bewegung des Schaltrings 5 in die zweite Drehrichtung 10 zu verhindern, d.h. ein Drehen des Siebträgers 1 in die zweite Drehrichtung über die Anfangsposition 21 hinaus zu verhindern. Der zweite Anschlag 27 ist in einer weiteren Aussparung 28 des Schaltrings 5 angeordnet, kontaktiert den Schaltring 5 an einer Oberfläche des Schaltrings, die sich von einem Zentrum des Schaltrings nach außen erstreckt, in einer Endposition 11 eines in die Aufnahmeeinheit der Vorrichtung eingesetzten, zur Druckextraktion von Kaffee geeigneten Siebträgers 1 (d.h. stößt an diese Oberfläche des Schaltrings an; siehe Figur 3) und ist ausgestaltet, eine Bewegung des Schaltrings 5 in die erste Drehrichtung 3 zu verhindern, d.h. ein Drehen des Siebträgers 1 in die erste Drehrichtung über die Endposition 11 hinaus zu verhindern.

Figur 1 zeigt die Anordnung des Siebträgers in der Aufnahmeeinheit 2, 2' der Vorrichtung in einer Anfangsposition 21 des Siebträgers 1, d.h. in einer Einsetzposition des Siebträgers 1 in die Aufnahmeeinheit 2, 2' der Vorrichtung.

Figur 2 zeigt die Anordnung des Siebträgers in der Aufnahmeeinheit 2, 2' der Vorrichtung in einer Zwischenposition, die sich zwischen der Anfangsposition 21 des Siebträgers 1 und der Endposition 11 des Siebträgers 1 befindet, d.h. in einer Position, in der sich der Siebträger 1 während einer Bewegung des Siebträgers 1 entlang der ersten Drehrichtung 10 in der Aufnahmeeinheit 2, 2' befindet, bevor er die Endposition 11 in der Aufnahmeeinheit 2, 2' erreicht hat.

Figur 3 zeigt die Anordnung des Siebträgers in der Aufnahmeeinheit 2, 2' der Vorrichtung in einer Endposition 11 des Siebträgers 1, d.h. in einer Kaffeebezugsposition des Siebträgers 1 in der Aufnahmeeinheit 2, 2' der Vorrichtung. In dieser Figur ist dargestellt, wie das Verriegelungselement 9 in die zweite Aussparung 8 des Schaltrings 5 eingreift und eine Drehung des Schaltrings 5 in die zweite Drehrichtung 10 (d.h. von der Endposition 11 des Siebträgers 1 in Richtung Anfangsposition 21 des Siebträgers 1) verhindert. Die Verhinderung der Drehung des Schaltrings 5 verhindert auch eine Drehung des Siebträgers 1, da die ersten Aussparungen 6, 6', 6" des Schaltrings 5 formschlüssig jeweils einen Nockens des Siebträgers 1 aufnehmen (hier: insgesamt 3 Nocken) und damit eine Drehbeweglichkeit des Schaltrings 5 mit einer Drehbeweglichkeit des Siebträgers 1 koppeln. Weist der untere Teil 2' der Aufnahmeeinheit 2, 2' zudem einen zweiten Anschlag 27 in der weiteren Aussparung 28 des Schaltrings auf, so ist in der Endposition 11 des Siebträgers auch eine Drehung des Schaltrings 5 und damit des Siebträgers 1 in die erste Drehrichtung 3 nicht möglich, da der Schaltring 5 in diese Drehrichtung 3 durch den zweiten Anschlag 27 am unteren Teil 2' der Aufnahmeeinheit 2, 2' blockiert wird. Der Siebträger wird somit in der Endposition 11 (Kaffeebezugsposition) einerseits vom zweiten Anschlag 27 und andererseits vom Verriegelungselement 9 in der Aufnahmeeinheit 2, 2' fixiert. Ferner wird in dieser Position eine Drehbewegung in die zweite Drehrichtung 10 durch die zweite Rampe 23 der Kulisse 18 erschwert (zusätzlicher Widerstand), da die zweite Rampe 23 im Falle einer solchen Drehbewegung eine Kraft auf das Kugellager 15 des Lagerbocks 14 ausüben würde, die der Kraft der Feder 17, die den Lagerbock 14 mit dem Schaltring 5 verbindet, entgegenwirkt. Dieser zusätzliche Widerstand ist vorteilhaft, da er eine im Falle einer Bewegung des Siebträgers 1 in die zweite Drehrichtung 10 auf das Verriegelungselement 9 wirkende Kraft reduziert und somit nicht nur ein Verklemmen des Verriegelungselements 9 verhindern kann, sondern auch einen Verschleiß des Verriegelungselements 9 reduzieren kann, wodurch Ausfallzeiten vermieden werden können und die Lebensdauer des Verriegelungselements erhöht ist.

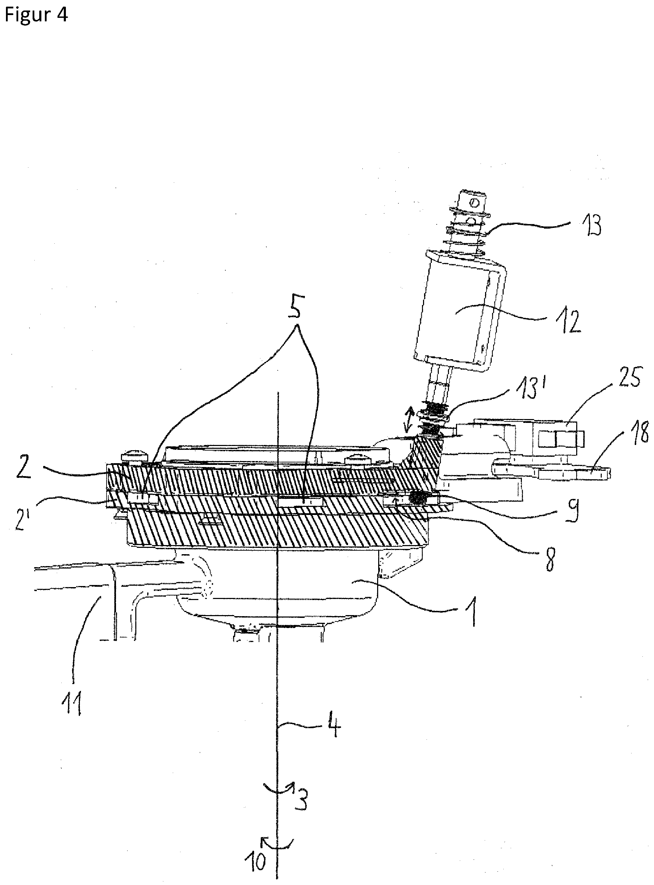

Figur 4 zeigt schematisch eine erfindungsgemäße Vorrichtung zur Aufnahme eines zur Druckextraktion von Kaffee geeigneten Siebträgers 1 in der seitlichen Ansicht. In dieser Ansicht ist besonders gut erkennbar, wie das Verriegelungselement 9 in die zweite Aussparung 8 des Schaltrings 5 hinein bewegt ist. Die in Figur 4 dargestellte Position des Siebträgers 1 ist somit die Endposition 11 des Siebträgers 1 in der Aufnahmeeinheit 2, 2'. Die Aufnahmeeinheit 2, 2 weist einen unteren Teil 2' und einen oberen Teil 2 auf. Aufgrund des in die zweite Aussparung 8 über die Kraft der elektromagnetischen Vorrichtung 12 hinein bewegten Verriegelungselements 9 ist eine Drehung des Schaltrings 5 und damit des Siebträgers 1 in die zweite Drehrichtung 10 nicht mehr möglich, da der Schaltring 5 in diese Drehrichtung 10 durch das Verriegelungselement 9 blockiert wird (siehe auch Figur 3). Eine Bewegung des Siebträgers 1 in die zweite Drehrichtung 10 wird erst wieder möglich, wenn das Verriegelungselement 9 aus der zweiten Aussparung 8 des Schaltrings 5 heraus bewegt wird (siehe z.B. Figuren 1 und 2). Dies kann beispielsweise durch Deaktivieren der elektromagnetischen Vorrichtung 12 und die Kraft von mindestens einer Feder 13, 13' geschehen, die an der elektromagnetischen Vorrichtung 12 angebracht ist.

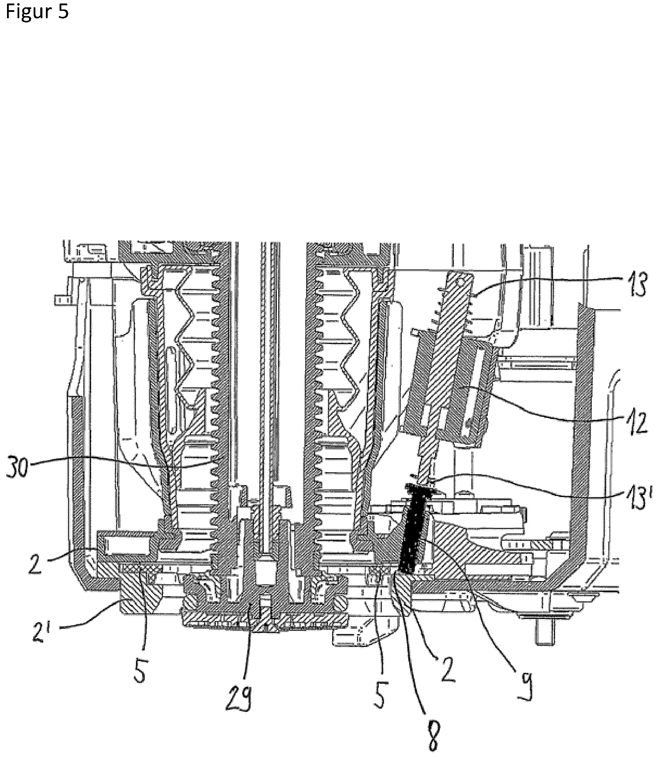

Figur 5 zeigt schematisch einen Teil einer erfindungsgemäßen Kaffeemaschine, die eine erfindungsgemäße Vorrichtung enthält. Die Aufnahmeeinheit 2, 2' weist einen unteren Teil 2' und einen oberen Teil 2 auf. Der Schaltring 5 ist zwischen dem oberen Teil 2 und dem unteren Teil der Aufnahmeeinheit 2' angeordnet ist drehbar auf dem unteren Teil 2' der Aufnahmeeinheit gelagert. Ein Brühkolben 29 der Kaffeemaschine kann über einen Spindelantrieb 30 der Kaffeemaschine translatorisch zum Siebträger (nicht gezeigt) hin und von diesem weg bewegt werden. Die in Figur 5 dargestellte Position entspricht einer Endposition des Siebträgers. Das Verriegelungselement 9 wurde über Krafteinwirkung einer elektromagnetischen Vorrichtung 12 (hier: ein Hubmagnet), die einer Kraft von mindestens einer (an der elektromagnetischen Vorrichtung angebrachten) Feder 13, 13' entgegenwirkt, in die zweite Aussparung 8 des Schaltrings 5 hineinbewegt. Dadurch ist eine Drehung des Schaltrings 5 und damit des Siebträgers 1 in die zweite Drehrichtung 10 nicht mehr möglich, da der Schaltring 5 in diese Drehrichtung durch das Verriegelungselement 9 blockiert wird (siehe auch Figur 3).

### Bezugszeichenliste

- 1:: Siebträger, der zur Druckextraktion von Kaffee geeignet ist;
- 2, 2':: Aufnahmeeinheit zur Aufnahme des Siebträgers;
- 3:: erste Drehrichtung des Siebträgers (hier: gegen den Uhrzeigersinn);
- 4:: Drehachse des Siebträgers;
- 5:: Schaltring;
- 6, 6', 6":: erste Aussparung des Schaltrings;
- 7:: Nocken des Siebträgers;
- 8:: zweite Aussparung des Schaltrings;
- 9:: Verriegelungselement (z.B. Bolzen);
- 10:: zweite Drehrichtung des Siebträgers (hier: im Uhrzeigersinn);
- 11:: Endposition des Siebträgers;
- 12:: Elektromagnet (hier: ein Hubmagnet);
- 13, 13':: Feder bei Verriegelungselement (Feder 13 bewegt den Elektromagnet; Feder 13' ist mit Verriegelungselement verbunden);
- 14:: Lagerbock des Schaltrings;
- 15:: Außenoberfläche des Kugellagers des Lagerbocks (Außenringoberfläche);
- 16:: Kugellager des Lagerbocks;
- 17:: Feder des Lagerbocks;
- 18:: Kulisse der Vorrichtung;
- 19:: Oberfläche der Kulisse;
- 20:: erste Rampe der Kulisse;
- 21:: Anfangsposition des Siebträgers;
- 22:: Oberfläche der Kulisse gegenüber dem Kugellager (genauer: gegenüber einem Teil einer Außenoberfläche des Kugellagers) in Anfangsposition;
- 23:: zweite Rampe der Kulisse;
- 24:: Oberfläche der Kulisse gegenüber dem Kugellager (genauer: gegenüber einem Teil einer Außenoberfläche des Kugellagers) in Endposition;
- 25:: Mikroschalter der Vorrichtung;
- 26:: erster Anschlag am unteren Teil der Aufnahmeeinheit;
- 27:: zweiter Anschlag am unteren Teil der Aufnahmeeinheit;
- 28:: weitere Aussparung des Schaltrings;
- 29:: Brühkolben einer Kaffeemaschine; und
- 30:: Spindelantrieb eines Brühkolbens einer Kaffeemaschine.

## Patentansprüche

1. Vorrichtung zur Aufnahme eines zur Druckextraktion von Kaffee geeigneten Siebträgers (1), enthaltend
a) eine Aufnahmeeinheit (2, 2'), die dazu geeignet ist, einen zur Druckextraktion von Kaffee geeigneten Siebträger (1) durch eine Drehung des Siebträgers (1) in eine erste Drehrichtung (3) um eine Drehachse (4) des Siebträgers (1) aufzunehmen;
b) ein im Wesentlichen flacher Schaltring (5), der drehbar auf einem Teil der Aufnahmeeinheit (2, 2') gelagert ist und erste Aussparungen (6, 6', 6") aufweist, die jeweils zur formschlüssigen Aufnahme jeweils eines Nockens (7) eines zur Druckextraktion von Kaffee geeigneten Siebträgers (1) geeignet sind, wobei der Schaltring (5) ein Strukturelement aufweist;
c) ein bewegliches oder unbewegliches Verriegelungselement (9),
**dadurch gekennzeichnet, dass**
i) das Verriegelungselement (9) dazu geeignet ist, sich zu dem Strukturelement des Schaltrings (5) hin zu bewegen und von dem Strukturelement des Schaltrings (5) weg zu bewegen, wobei ein an das Strukturelement des Schaltrings (5) hin bewegtes Verriegelungselement (9) dazu geeignet ist, eine Drehung eines in die Aufnahmeeinheit (2, 2') aufgenommenen Siebträgers (1) in eine zweite Drehrichtung (10) um eine Drehachse (4) des Siebträgers (1), die der ersten Drehrichtung (3) entgegengesetzt ist, zu verhindern; und/oder
ii) das Strukturelement dazu geeignet ist, sich zu dem Verriegelungselement (9) der Vorrichtung hin zu bewegen und von dem Verriegelungselement (9) der Vorrichtung weg zu bewegen, wobei ein an das Verriegelungselement (9) hin bewegtes Strukturelement dazu geeignet ist, eine Drehung eines in die Aufnahmeeinheit (2, 2') aufgenommenen Siebträgers (1) in eine zweite Drehrichtung (10) um eine Drehachse (4) des Siebträgers (1), die der ersten Drehrichtung (3) entgegengesetzt ist, zu verhindern.

2. Vorrichtung gemäß Anspruch 1, **dadurch gekennzeichnet, dass** das Strukturelement des Schaltrings (5) eine zweite Aussparung (8) des Schaltrings (5) ist, wobei
i) das Verriegelungselement (9) dazu geeignet ist, sich in die zweite Aussparung (8) des Schaltrings (5) hinein und heraus zu bewegen, wobei ein in die zweite Aussparung (8) des Schaltrings (5) hinein bewegtes Verriegelungselement (9) dazu geeignet ist, eine Drehung eines in die Aufnahmeeinheit (2, 2') aufgenommenen Siebträgers (1) in eine zweite Drehrichtung (10) um eine Drehachse (4) des Siebträgers (1), die der ersten Drehrichtung (3) entgegengesetzt ist, zu verhindern; und/oder
ii) der Schaltring (5) dazu geeignet ist, die zweite Aussparung (8) des Schaltrings (5) an das Verriegelungselement (9) hin zu bewegen und vom Verriegelungselement (9) weg zu bewegen, wobei eine an das Verriegelungselement (9) hin bewegte zweite Aussparung (8) dazu geeignet ist, eine Drehung eines in die Aufnahmeeinheit (2, 2') aufgenommenen Siebträgers (1) in eine zweite Drehrichtung (10) um eine Drehachse (4) des Siebträgers (1), die der ersten Drehrichtung (3) entgegengesetzt ist, zu verhindern.

3. Vorrichtung gemäß Anspruch 1, **dadurch gekennzeichnet, dass** das Strukturelement des Schaltrings (5) eine Erhebung des Schaltrings (5) ist, wobei
i) das Verriegelungselement (9) dazu geeignet ist, sich zu der Erhebung des Schaltrings (5) hin und von der Erhebung des Schaltrings (5) weg zu bewegen, wobei ein zu der Erhebung des Schaltrings (5) hin bewegtes Verriegelungselement (9) dazu geeignet ist, eine Drehung eines in die Aufnahmeeinheit (2, 2') aufgenommenen Siebträgers (1) in eine zweite Drehrichtung (10) um eine Drehachse (4) des Siebträgers (1), die der ersten Drehrichtung (3) entgegengesetzt ist, zu verhindern; und/oder
ii) die Erhebung dazu geeignet ist, sich zu dem Verriegelungselement (9) hin zu bewegen und vom Verriegelungselement (9) weg zu bewegen, wobei eine zu dem Verriegelungselement (9) hin bewegte Erhebung dazu geeignet ist, eine Drehung eines in die Aufnahmeeinheit (2, 2') aufgenommenen Siebträgers (1) in eine zweite Drehrichtung (10) um eine Drehachse (4) des Siebträgers (1), die der ersten Drehrichtung (3) entgegengesetzt ist, zu verhindern.

4. Vorrichtung gemäß einem der vorhergehenden Ansprüche, **dadurch gekennzeichnet, dass** die Vorrichtung ein Steuerelement enthält, das dazu geeignet ist, nach einer Drehung eines in die Aufnahmeeinheit (2, 2') eingesetzten, zur Druckextraktion von Kaffee geeigneten Siebträgers (1) in eine Endposition (11), das Verriegelungselement (9) der Vorrichtung und das Strukturelement des Schaltrings (5) aufeinander zu zu bewegen und voneinander weg zu bewegen, bevorzugt
i) das Verriegelungselement (9) in eine zweite Aussparung (8) des Schaltrings (5) hinein zu bewegen und/oder aus einer zweiten Aussparung des Schaltrings (5) heraus zu bewegen, und/oder das Verriegelungselement (9) zu einer Erhebung des Schaltrings (5) hin zu bewegen und/oder von einer Erhebung des Schaltrings (5) weg zu bewegen; und/oder
ii) eine zweite Aussparung (8) des Schaltrings (5) zu dem Verriegelungselement (9) hin zu bewegen und/oder von dem unbeweglichen Verriegelungselement (9) weg zu bewegen, und/oder eine Erhebung des Schaltrings (5) zu dem Verriegelungselement (9) hin zu bewegen und/oder von dem Verriegelungselement (9) weg zu bewegen;
wobei das Steuerelement bevorzugt konfiguriert ist, diese Bewegung über eine Kraft zu bewirken, die ausgewählt ist aus der Gruppe bestehend aus Kraft eines elektrischen Motors, Kraft einer elektromagnetischen Vorrichtung (12), pneumatische Kraft, hydraulische Kraft, magnetische Kraft, Kraft einer Feder (13, 13') und Kombinationen hiervon.

5. Vorrichtung gemäß einem der vorhergehenden Ansprüche, **dadurch gekennzeichnet, dass** das Verriegelungselement (9) eine Feder (13, 13') und/oder zwei Permanentmagneten aufweist, die dazu geeignet ist/sind,
i) das Verriegelungselement (9) in einer Position zu halten, in welcher das Verriegelungselement (9) aus einer zweiten Aussparung des Schaltrings (5) heraus bewegt ist und/oder von einer Erhebung des Schaltrings (5) weg bewegt ist, wobei das Verriegelungselement (9) bevorzugt mit einer Vorrichtung verbunden ist, die dazu geeignet ist, das Verriegelungselement (9) in die zweite Aussparung (8) des Schaltrings (5) hinein zu bewegen und/oder zu einer Erhebung des Schaltrings (5) hin zu bewegen, wobei die Vorrichtung besonders bevorzugt ausgewählt ist aus der Gruppe bestehend aus elektrischer Motor, elektromagnetische Vorrichtung (12), pneumatische Vorrichtung, hydraulische Vorrichtung und Kombinationen hiervon; oder
ii) das Verriegelungselement (9) in einer Position zu halten, in welcher das Verriegelungselement (9) in eine zweite Aussparung (8) des Schaltrings (5) hinein bewegt ist und/oder zu einer Erhebung des Schaltrings (5) hin bewegt ist, wobei das Verriegelungselement (9) bevorzugt mit einer Vorrichtung verbunden ist, die dazu geeignet ist, das Verriegelungselement (9) aus der zweiten Aussparung des Schaltrings (5) heraus zu bewegen und/oder von der Erhebung des Schaltrings (5) weg zu bewegen, wobei die Vorrichtung besonders bevorzugt ausgewählt ist aus der Gruppe bestehend aus elektrischer Motor, elektromagnetische Vorrichtung (12), pneumatische Vorrichtung, hydraulische Vorrichtung und Kombinationen hiervon.

6. Vorrichtung gemäß einem der vorhergehenden Ansprüche, **dadurch gekennzeichnet, dass** das Strukturelement des Schaltrings (5) eine Feder und/oder zwei Permanentmagneten aufweist, die dazu geeignet ist/sind,
i) das Strukturelement in einer Position zu halten, in welcher das Strukturelement von dem Verriegelungselement (9) weg bewegt ist, wobei das Strukturelement bevorzugt mit einer Vorrichtung verbunden ist, die dazu geeignet ist, das Strukturelement zu dem Verriegelungselement (9) hin zu bewegen, wobei die Vorrichtung besonders bevorzugt ausgewählt ist aus der Gruppe bestehend aus elektrischer Motor, elektromagnetische Vorrichtung, pneumatische Vorrichtung, hydraulische Vorrichtung und Kombinationen hiervon; oder
ii) das Strukturelement in einer Position zu halten, in welcher das Strukturelement zu dem Verriegelungselement (9) hin bewegt ist, wobei das Strukturelement bevorzugt mit einer Vorrichtung verbunden ist, die dazu geeignet ist, das Strukturelement von dem Verriegelungselement (9) weg zu bewegen, wobei die Vorrichtung besonders bevorzugt ausgewählt ist aus der Gruppe bestehend aus elektrischer Motor, elektromagnetische Vorrichtung, pneumatische Vorrichtung, hydraulische Vorrichtung und Kombinationen hiervon.

7. Vorrichtung gemäß einem der vorhergehenden Ansprüche, **dadurch gekennzeichnet, dass** die Vorrichtung
i) einen Schaltring (5) enthält, der einen Lagerbock (14) aufweist, wobei der Lagerbock (14) ein beweglich auf dem Lagerbock (14) gelagertes Kugellager (16) und mindestens eine Feder (17) aufweist, wobei der Lagerbock (14) über die mindestens eine Feder (17) mit dem Schaltring (5) verbunden ist; und
ii) eine Kulisse (18) enthält, die dem Lagerbock (14) des Schaltrings (5) gegenüberliegend angeordnet ist und eine im Wesentlichen kreisförmig gebogene Oberfläche (19, 22, 24) aufweist, wobei die mindestens eine Feder (17) des Lagerbocks (14) den Lagerbock (14) und über den Lagerbock (14) das Kugellager (16) des Lagerbocks (14) gegen die im Wesentlichen kreisförmig gebogene Oberfläche (19, 22, 24) der Kulisse (18) der Vorrichtung drückt.

8. Vorrichtung gemäß dem vorhergehenden Anspruch, **dadurch gekennzeichnet, dass** die Kulisse (18) eine erste Rampe (20) aufweist, die sich in Richtung Lagerblock erstreckt, wobei die erste Rampe (20) bevorzugt
i) in Richtung der ersten Drehrichtung (3) neben einer Anfangsposition (21) eines in die Aufnahmeeinheit (2, 2') der Vorrichtung eingesetzten, zur Druckextraktion von Kaffee geeigneten Siebträgers (1) an der Kulisse (18) angeordnet ist; und/oder
ii) eine Höhe von 1 bis 4 mm, bevorzugt 1,5 bis 3,5 mm, besonders bevorzugt 2 bis 3 mm, insbesondere 2,5 mm, in Bezug zu einer Oberfläche (22) der Kulisse (18) aufweist, die dem Kugellager (16) des Lagerbocks (14) in einer Anfangsposition (21) eines in die Aufnahmeeinheit (2, 2') der Vorrichtung eingesetzten, zur Druckextraktion von Kaffee geeigneten Siebträgers (1) gegenüberliegt; und/oder
iii) eine Länge von 20 bis 60 mm, bevorzugt 30 bis 50 mm, besonders bevorzugt 35 bis 45 mm, insbesondere 40 mm, in die erste Drehrichtung (3) aufweist.

9. Vorrichtung gemäß dem vorhergehenden Anspruch, **dadurch gekennzeichnet, dass** die Kulisse (18) eine zweite Rampe (23) aufweist, die sich in Richtung Lagerblock erstreckt, wobei die zweite Rampe (23) bevorzugt
i) in Richtung der zweiten Drehrichtung (10) neben einer Endposition (11) eines in die Aufnahmeeinheit (2, 2') der Vorrichtung eingesetzten, zur Druckextraktion von Kaffee geeigneten Siebträgers (1) an der Kulisse (18) angeordnet ist; und/oder
ii) eine Höhe von 3,5 bis 6,5 mm, bevorzugt 4 bis 6 mm, besonders bevorzugt 4,5 bis 5,5 mm, insbesondere 5 mm, in Bezug zu einer Oberfläche (24) der Kulisse (18) aufweist, die dem Kugellager (16) des Lagerbocks (14) in einer Endposition (11) eines in die Aufnahmeeinheit (2, 2') der Vorrichtung eingesetzten, zur Druckextraktion von Kaffee geeigneten Siebträgers (1) gegenüberliegt; und/oder
iii) eine Länge von 5 bis 35 mm, bevorzugt 10 bis 30 mm, besonders bevorzugt 15 bis 25 mm, insbesondere 20 mm, in die erste Drehrichtung (3) aufweist.

10. Vorrichtung gemäß einem der vorhergehenden Ansprüche, **dadurch gekennzeichnet, dass** die Vorrichtung einen Mikroschalter (25) aufweist, der dazu geeignet ist,
i) in einer Endposition (11) eines in die Aufnahmeeinheit (2, 2') eingesetzten, zur Druckextraktion von Kaffee geeigneten Siebträgers (1) von dem Schaltring (5) der Vorrichtung betätigt zu werden; und/oder
ii) in einer anderen Position als der Endposition (11) eines in die Aufnahmeeinheit (2, 2') eingesetzten, zur Druckextraktion von Kaffee geeigneten Siebträgers (1) von dem Schaltring (5) der Vorrichtung nicht betätigt zu werden, wobei sich die andere Position bevorzugt der zweiten Drehrichtung (10) von einer Endposition (11) eines in die Aufnahmeeinheit (2, 2') eingesetzten, zur Druckextraktion von Kaffee geeigneten Siebträgers (1) befindet.

11. Vorrichtung gemäß einem der vorhergehenden Ansprüche, **dadurch gekennzeichnet, dass** die Aufnahmeeinheit (2, 2'), bevorzugt ein Teil der Aufnahmeeinheit (2, 2'), einen ersten Anschlag (26) und einen zweiten Anschlag (27) aufweist, wobei bevorzugt
i) der erste Anschlag (26) in einer zweiten Aussparung des Schaltrings (5) angeordnet ist oder in Richtung der zweiten Drehrichtung (10) neben einer Erhebung des Schaltrings (5) angeordnet ist ohne sich in eine zweite Aussparung (8) des Schaltrings (5) zu erstrecken, den Schaltring (5) in einer Anfangsposition (21) eines in die Aufnahmeeinheit (2, 2') der Vorrichtung eingesetzten, zur Druckextraktion von Kaffee geeigneten Siebträgers (1) kontaktiert und ausgestaltet ist, eine Bewegung des Schaltrings (5) von der Anfangsposition (21) in die zweite Drehrichtung (10) zu verhindern; und/oder
ii) der zweite Anschlag (27) in einer weiteren Aussparung (28) des Schaltrings (5) angeordnet ist oder in Richtung der ersten Drehrichtung (3) neben einer weiteren Erhebung des Schaltrings (5) angeordnet ist ohne sich in eine zweite Aussparung (8) des Schaltrings (5) zu erstrecken, den Schaltring (5) in einer Endposition (11) eines in die Aufnahmeeinheit (2, 2') der Vorrichtung eingesetzten, zur Druckextraktion von Kaffee geeigneten Siebträgers (1) kontaktiert und ausgestaltet ist, eine Bewegung des Schaltrings (5) von der Endposition (11) in die erste Drehrichtung (3) zu verhindern.

12. Kaffeemaschine enthaltend eine Vorrichtung gemäß einem der vorhergehenden Ansprüche und eine Steuereinheit.

13. Kaffeemaschine gemäß Anspruch 12, **dadurch gekennzeichnet, dass** die Kaffeemaschine eine Vorrichtung gemäß einem der Ansprüche 4 bis 11 enthält, wobei die Steuereinheit der Kaffeemaschine konfiguriert ist, das Steuerelement der Vorrichtung zu steuern, wobei die Steuereinheit der Kaffeemaschine bevorzugt konfiguriert ist, zu veranlassen, dass das Verriegelungselement (9) der Vorrichtung und das Strukturelement des Schaltrings (5) aufeinander zu bewegt werden und/oder voneinander weg bewegt werden, wobei die Steuereinheit der Kaffeemaschine besonders bevorzugt konfiguriert ist, zu veranlassen, dass
i) das Verriegelungselement (9) in eine zweite Aussparung (8) der Schaltring (5) hinein bewegt wird und/oder zu einer Erhebung des Schaltrings (5) hin bewegt wird, wenn ein in die Aufnahmeeinheit (2, 2') eingesetzter, zur Druckextraktion von Kaffee geeigneter Siebträger (1) in einer Endposition (11) in der Aufnahmeeinheit (2, 2') angeordnet wurde und noch kein Kaffee bezogen wurde, wobei die Steuereinheit der Kaffeemaschine besonders bevorzugt konfiguriert ist, hierfür eine Vorrichtung zu steuern, die ausgewählt ist aus der Gruppe bestehend aus elektrischer Motor, elektromagnetische Vorrichtung (12), pneumatische Vorrichtung, hydraulische Vorrichtung und Kombinationen hiervon; und/oder
ii) das Verriegelungselement (9) aus einer zweiten Aussparung (8) des Schaltrings (5) heraus bewegt wird und/oder von einer Erhebung des Schaltrings (5) weg bewegt wird, wenn ein in die Aufnahmeeinheit (2, 2') eingesetzter, zur Druckextraktion von Kaffee geeigneter Siebträger (1) in einer Endposition (11) in der Aufnahmeeinheit (2, 2') angeordnet ist und bereits ein Kaffee bezogen wurde, wobei die Steuereinheit der Kaffeemaschine besonders bevorzugt konfiguriert ist, hierfür eine Vorrichtung zu steuern, die ausgewählt ist aus der Gruppe bestehend aus elektrischer Motor, elektromagnetische Vorrichtung (12), pneumatische Vorrichtung, hydraulische Vorrichtung und Kombinationen hiervon; und/oder
iii) das Strukturelement des Schaltrings (5) zu dem Verriegelungselement (9) hin bewegt wird, wenn ein in die Aufnahmeeinheit (2, 2') eingesetzter, zur Druckextraktion von Kaffee geeigneter Siebträger (1) in einer Endposition (11) in der Aufnahmeeinheit (2, 2') angeordnet wurde und noch kein Kaffee bezogen wurde, wobei die Steuereinheit der Kaffeemaschine besonders bevorzugt konfiguriert ist, hierfür eine Vorrichtung zu steuern, die ausgewählt ist aus der Gruppe bestehend aus elektrischer Motor, elektromagnetische Vorrichtung, pneumatische Vorrichtung, hydraulische Vorrichtung und Kombinationen hiervon; und/oder
iv) das Strukturelement des Schaltrings (5) von dem Verriegelungselement (9) weg bewegt wird, wenn ein in die Aufnahmeeinheit (2, 2') eingesetzter, zur Druckextraktion von Kaffee geeigneter Siebträger (1) in einer Endposition (11) in der Aufnahmeeinheit (2, 2') angeordnet ist und bereits ein Kaffee bezogen wurde, wobei die Steuereinheit der Kaffeemaschine besonders bevorzugt konfiguriert ist, hierfür eine Vorrichtung zu steuern, die ausgewählt ist aus der Gruppe bestehend aus elektrischer Motor, elektromagnetische Vorrichtung, pneumatische Vorrichtung, hydraulische Vorrichtung und Kombinationen hiervon.

14. Kaffeemaschine gemäß einem der Ansprüche 12 oder 13, **dadurch gekennzeichnet, dass** die Kaffeemaschine eine Vorrichtung gemäß einem der Ansprüche 10 oder 11 enthält, wobei die Steuereinheit der Kaffeemaschine konfiguriert ist, Signale des Mikroschalters (25) der Vorrichtung zu empfangen, wobei die Steuereinheit der Kaffeemaschine bevorzugt konfiguriert ist,
i) wenn vom Mikroschalter (25) ein Betätigungssignal empfangen wird und noch kein Bezug von einem Kaffee erfolgt ist, auf einer Anzeigeeinrichtung der Kaffeemaschine eine dem eingesetzten Siebträger (1) entsprechende Auswahl an Getränken angezeigt wird; und/oder
ii) wenn vom Mikroschalter (25) ein Betätigungssignal empfangen wird und noch kein Bezug von einem Kaffee erfolgt ist, das Verriegelungselement (9) der Vorrichtung zu dem Strukturelement des Schaltrings (5) hin zu bewegen und/oder das Strukturelement des Schaltrings (5) zu dem Verriegelungselement (9) der Vorrichtung hin zu bewegen, bevorzugt das Verriegelungselement (9) in eine zweite Aussparung (8) des Schaltrings (5) hinein zu bewegen, das Verriegelungselement (9) zu einer Erhebung des Schaltrings (5) hin zu bewegen, eine zweite Aussparung (8) des Schaltrings (5) zu dem Verriegelungselement (9) hin zu bewegen und/oder eine Erhebung des Schaltrings (5) zu dem Verriegelungselement (9) hin zu bewegen, besonders bevorzugt anschließend einen Kaffeebezug, insbesondere einen Spindelantrieb (30) eines Brühkolbens (29) der Kaffeemaschine, freizugeben, oder
wenn vom Mikroschalter (25) ein Betätigungssignal empfangen wird, noch kein Bezug von einem Kaffee erfolgt ist und der Kaffeemaschine über eine Eingabeeinrichtung der Kaffeemaschine von einem Benutzer ein Signal zur Zubereitung eines Getränks gegeben wird, das Verriegelungselement (9) der Vorrichtung zu dem Strukturelement des Schaltrings (5) hin zu bewegen und/oder das Strukturelement des Schaltrings (5) zu dem Verriegelungselement (9) der Vorrichtung hin zu bewegen, bevorzugt das Verriegelungselement (9) in eine zweite Aussparung (8) des Schaltrings (5) hinein zu bewegen, das Verriegelungselement (9) zu einer Erhebung des Schaltrings (5) hin zu bewegen, eine zweite Aussparung (8) des Schaltrings zu dem Verriegelungselement (9) hin zu bewegen und/oder eine Erhebung des Schaltrings (5) zu dem Verriegelungselement (9) hin zu bewegen, besonders bevorzugt anschließend einen Kaffeebezug, insbesondere einen Spindelantrieb (30) eines Brühkolbens (29) der Kaffeemaschine, freizugeben; und/oder
iii) wenn vom Mikroschalter (25) ein Betätigungssignal empfangen wird und ein Bezug von einem Kaffee abgeschlossen ist, das Verriegelungselement (9) der Vorrichtung von dem Strukturelement des Schaltrings (5) weg zu bewegen und/oder das Strukturelement des Schaltrings (5) von dem Verriegelungselement (9) der Vorrichtung weg zu bewegen, bevorzugt das Verriegelungselement (9) aus einer zweiten Aussparung des Schaltrings (5) heraus zu bewegen, das Verriegelungselement (9) von einer Erhebung des Schaltrings (5) weg zu bewegen, eine zweite Aussparung (8) des Schaltrings (5) von dem Verriegelungselement (9) weg zu bewegen und/oder eine Erhebung des Schaltrings (5) von dem Verriegelungselement (9) weg zu bewegen; und/oder
iv) wenn vom Mikroschalter (25) kein Betätigungssignal empfangen wird, einen Kaffeebezug, insbesondere einen Spindelantrieb (30) eines Brühkolbens (29) der Kaffeemaschine, zu blockieren.

15. Verwendung der Vorrichtung gemäß einem der Ansprüche 1 bis 11 in einer Kaffeemaschine, bevorzugt in einem Kaffee-Halbautomat oder einer Kaffee-Hybridmaschine.

## Claims

1. A device for receiving a portafilter (1) suitable for pressure extraction of coffee, comprising
a) a receiving unit (2, 2') which is suitable for receiving a portafilter (1) suitable for pressure extraction of coffee by rotating the portafilter (1) in a first rotational direction (3) about an axis of rotation (4) of the portafilter (1);
b) a substantially flat switching ring (5) which is rotatably mounted on a part of the receiving unit (2, 2') and has first recesses (6, 6', 6") which are each suitable for form-fittingly receiving a respective cam (7) of a portafilter (1) suitable for pressure extraction of coffee, wherein the switching ring (5) has a structural element;
c) a movable or immovable locking element (9),
**characterized in that**
i) the locking element (9) is adapted to move towards the structural element of the switching ring (5) and to move away from the structural element of the switching ring (5), wherein a locking element (9) moved towards the structural element of the switching ring (5) is adapted to prevent rotation of a portafilter (1) received in the receiving unit (2, 2') in a second rotational direction (10) about an axis of rotation (4) of the portafilter (1) which is opposite to the first rotational direction (3); and/or
ii) the structural element is adapted to move towards the locking element (9) of the device and to move away from the locking element (9) of the device, wherein a structural element moved towards the locking element (9) is adapted to prevent rotation of a portafilter (1) received in the receiving unit (2, 2') in a second rotational direction (10) about an axis of rotation (4) of the portafilter (1) which is opposite to the first rotational direction (3).

2. The device according to claim 1, **characterized in that** the structural element of the switching ring (5) is a second recess (8) of the switching ring (5), wherein
i) the locking element (9) is adapted to move in and out of the second recess (8) of the switching ring (5), wherein a locking element (9) moved into the second recess (8) of the switching ring (5) is adapted to prevent rotation of a portafilter (1) received in the receiving unit (2, 2') in a second rotational direction (10) about an axis of rotation (4) of the portafilter (1) opposite to the first rotational direction (3); and/or
ii) the switching ring (5) is adapted to move the second recess (8) of the switching ring (5) towards the locking element (9) and away from the locking element (9), wherein a second recess (8) moved towards the locking element (9) is adapted to prevent rotation of a portafilter (1) received in the receiving unit (2, 2') in a second rotational direction (10) about an axis of rotation (4) of the portafilter (1) which is opposite to the first rotational direction (3).

3. The device according to claim 1, **characterized in that** the structural element of the switching ring (5) is an elevation of the switching ring (5), wherein
i) the locking element (9) is adapted to move towards and away from the elevation of the switching ring (5), wherein a locking element (9) moved towards the elevation of the switching ring (5) is adapted to prevent rotation of a portafilter (1) received in the receiving unit (2, 2') in a second rotational direction (10) about an axis of rotation (4) of the portafilter (1) which is opposite to the first rotational direction (3); and/or
ii) the elevation is adapted to move towards the locking element (9) and to move away from the locking element (9), wherein an elevation moving towards the locking element (9) is adapted to prevent rotation of a portafilter (1) received in the receiving unit (2, 2') in a second rotational direction (10) about an axis of rotation (4) of the portafilter (1) opposite to the first rotational direction (3).

4. The device according to any one of the preceding claims, **characterized in that** the device includes a control element which is adapted to, after a rotation of a portafilter (1), which has been inserted in the receiving unit (2, 2') and is suitable for pressure extraction of coffee, to an end position (11), move the locking element (9) of the device and the structural element of the switching ring (5) towards and away from each other, preferably
i) to move the locking element (9) into a second recess (8) of the switching ring (5) and/or to move it out of a second recess (8) of the switching ring (5), and/or to move the locking element (9) towards an elevation of the switching ring (5) and/or to move it away from an elevation of the switching ring (5); and/or
ii) to move a second recess (8) of the switching ring (5) towards the locking element (9) and/or away from the immovable locking element (9), and/or to move an elevation of the switching ring (5) towards the locking element (9) and/or away from the locking element (9);
wherein the control element is preferably configured to effect said movement via a force selected from the group consisting of force of an electric motor, force of an electromagnetic device (12), pneumatic force, hydraulic force, magnetic force, force of a spring (13, 13'), and combinations thereof.

5. The device according to any of the preceding claims, **characterized in that** the locking element (9) comprises a spring (13, 13') and/or two permanent magnets which is/are adapted
i) to hold the locking element (9) in a position in which the locking element (9) is moved out of a second recess (8) of the switching ring (5) and/or moved away from an elevation of the switching ring (5), wherein the locking element (9) is preferably connected to a device adapted to move the locking element (9) into the second recess (8) of the switching ring (5) and/or towards an elevation of the switching ring (5), wherein the device is particularly preferably selected from the group consisting of electric motor, electromagnetic device (12), pneumatic device, hydraulic device and combinations thereof; or
ii) to hold the locking element (9) in a position in which the locking element (9) is moved into a second recess (8) of the switching ring (5) and/or is moved towards an elevation of the switching ring (5), wherein the locking element (9) is preferably connected to a device adapted to move the locking element (9) out of the second recess (8) of the switching ring (5) and/or away from the elevation of the switching ring (5), wherein the device is particularly preferably selected from the group consisting of electric motor, electromagnetic device (12), pneumatic device, hydraulic device and combinations thereof.

6. The device according to any one of the preceding claims, **characterized in that** the structural element of the switching ring (5) comprises a spring and/or two permanent magnets which is/are adapted
i) to hold the structural element in a position in which the structural element is moved away from the locking element (9), wherein the structural element is preferably connected to a device adapted to move the structural element towards the locking element (9), wherein the device is particularly preferably selected from the group consisting of electric motor, electromagnetic device, pneumatic device, hydraulic device and combinations thereof; or
ii) to hold the structural element in a position in which the structural element is moved towards the locking element (9), wherein the structural element is preferably connected to a device adapted to move the structural element away from the locking element (9), wherein the device is particularly preferably selected from the group consisting of electric motor, electromagnetic device, pneumatic device, hydraulic device and combinations thereof.

7. The device according to any one of the preceding claims, **characterized in that** the device
i) includes a switching ring (5) comprising a bearing block (14), wherein the bearing block (14) comprises a ball bearing (16) movably mounted on the bearing block (14) and at least one spring (17), wherein the bearing block (14) is connected to the switching ring (5) via the at least one spring (17); and
ii) includes a link (18), which is arranged opposite the bearing block (14) of the switching ring (5) and has a substantially circularly curved surface (19, 22, 24), wherein the at least one spring (17) of the bearing block (14) presses the bearing block (14) and, via the bearing block (14), the ball bearing (16) of the bearing block (14) against the substantially circularly curved surface (19, 22, 24) of the link (18) of the device.

8. The device according to the preceding claim, **characterized in that** the link (18) has a first ramp (20) which extends in the direction of the bearing block (14), wherein the first ramp (20) preferably
i) is arranged on the link (18) in the direction of the first rotational direction (3) next to an initial position (21) of a portafilter (1) inserted into the receiving unit (2, 2') of the device and suitable for pressure extraction of coffee; and/or
ii) has a height of 1 to 4 mm, preferably 1.5 to 3.5 mm, particularly preferably 2 to 3 mm, in particular 2.5 mm, in relation to a surface (22) of the link (18) which is opposite the ball bearing (16) of the bearing block (14) in an initial position (21) of a portafilter (1) inserted in the receiving unit (2, 2') of the device and suitable for pressure extraction of coffee; and/or
iii) has a length of 20 to 60 mm, preferably 30 to 50 mm, particularly preferably 35 to 45 mm, in particular 40 mm, in the first rotational direction (3).

9. The device according to the preceding claim, **characterized in that** the link (18) has a second ramp (23) which extends in the direction of the bearing block (14), wherein the second ramp (23) preferably
i) is arranged on the link (18) in the direction of the second rotational direction (10) next to an end position (11) of a portafilter (1) inserted into the receiving unit (2, 2') of the device and suitable for pressure extraction of coffee; and/or
ii) has a height of 3.5 to 6.5 mm, preferably 4 to 6 mm, particularly preferably 4.5 to 5.5 mm, in particular 5 mm, in relation to a surface (24) of the link (18) which is opposite the ball bearing (16) of the bearing block (14) in an end position (11) of a portafilter (1) inserted in the receiving unit (2, 2') of the device and suitable for pressure extraction of coffee; and/or
iii) has a length of 5 to 35 mm, preferably 10 to 30 mm, particularly preferably 15 to 25 mm, in particular 20 mm, in the first rotational direction (3).

10. The device according to any one of the preceding claims, **characterized in that** the device comprises a microswitch (25) which is adapted
i) to be actuated by the switching ring (5) of the device in an end position (11) of a portafilter (1) inserted in the receiving unit (2, 2') and suitable for pressure extraction of coffee; and/or
ii) not to be actuated by the switching ring (5) of the device in a position other than the end position (11) of a portafilter (1) inserted in the receiving unit (2, 2') and suitable for the pressure extraction of coffee, wherein the other position is preferably located in the second rotational direction (10) from an end position (11) of a portafilter (1) inserted in the receiving unit (2, 2') and suitable for the pressure extraction of coffee.

11. The device according to any one of the preceding claims, **characterized in that** the receiving unit (2, 2'), preferably a part of the receiving unit (2, 2'), has a first stop (26) and a second stop (27), wherein preferably
i) the first stop (26) is arranged in a second recess (8) of the switching ring (5) or is arranged in the direction of the second rotational direction (10) next to an elevation of the switching ring (5) without extending into a second recess (8) of the switching ring (5), contacts the switching ring (5) in an initial position (21) of a portafilter (1) inserted into the receiving unit (2, 2') of the device and suitable for pressure extraction of coffee, and is configured to prevent movement of the switching ring (5) from the initial position (21) in the second rotational direction (10); and/or
ii) the second stop (27) is arranged in a further recess of the switching ring (5) or is arranged in the direction of the first rotational direction (3) next to a further elevation of the switching ring (5) without extending into a second recess (8) of the switching ring (5), contacts the switching ring (5) in an end position (11) of a portafilter (1) inserted into the receiving unit (2, 2') of the device and suitable for pressure extraction of coffee, and is configured to prevent movement of the switching ring (5) from the end position (11) in the first rotational direction (3).

12. A coffee machine including a device according to any one of the preceding claims and a control unit.

13. The coffee machine according to claim 12, **characterized in that** the coffee machine includes a device according to any one of claims 4 to 11, wherein the control unit of the coffee machine is configured to control the control element of the device, wherein the control unit of the coffee machine is preferably configured to cause the locking element (9) of the device and the structural element of the switching ring (5) to be moved towards and/or away from each other, wherein the control unit of the coffee machine is particularly preferably configured to cause
i) the locking element (9) to be moved into a second recess (8) of the switching ring (5) and/or to be moved towards an elevation of the switching ring (5) when a portafilter (1) suitable for pressure extraction of coffee inserted into the receiving unit (2, 2') has been placed in an end position (11) in the receiving unit (2, 2') and no coffee has yet been supplied, wherein the control unit of the coffee machine is particularly preferably configured to control a device selected from the group consisting of electric motor, electromagnetic device (12), pneumatic device, hydraulic device and combinations thereof; and/or
ii) the locking element (9) to be moved out of a second recess (8) of the switching ring (5) and/or to be moved away from an elevation of the switching ring (5) when a portafilter (1) suitable for pressure extraction of coffee inserted in the receiving unit (2, 2') is arranged in an end position (11) in the receiving unit (2, 2') and a coffee has already been supplied, wherein the control unit of the coffee machine is particularly preferably configured to control a device selected from the group consisting of electric motor, electromagnetic device (12), pneumatic device, hydraulic device and combinations thereof; and/or
iii) the structural element of the switching ring (5) to be moved towards the locking element (9) when a portafilter (1) suitable for pressure extraction of coffee inserted in the receiving unit (2, 2') has been placed in an end position (11) in the receiving unit (2, 2') and no coffee has yet been supplied, wherein the control unit of the coffee machine is particularly preferably configured to control a device selected from the group consisting of electric motor, electromagnetic device, pneumatic device, hydraulic device and combinations thereof; and/or
iv) the structural element of the switching ring (5) to be moved away from the locking element (9) when a portafilter (1) suitable for pressure extraction of coffee inserted in the receiving unit (2, 2') is arranged in an end position (11) in the receiving unit (2, 2') and a coffee has already been supplied, wherein the control unit of the coffee machine is particularly preferably configured to control a device selected from the group consisting of electric motor, electromagnetic device, pneumatic device, hydraulic device and combinations thereof.

14. The coffee machine according to any one of claims 12 or 13, **characterized in that** the coffee machine includes a device according to any one of claims 10 to 11, wherein the control unit of the coffee machine is configured to receive signals from the microswitch (25) of the device, wherein the control unit of the coffee machine is preferably configured,
i) when an actuation signal is received from the microswitch (25) and no coffee has yet been supplied, to display a selection of beverages corresponding to the inserted portafilter (1) on a display device of the coffee machine; and/or
ii) when an actuation signal is received from the microswitch (25) and no coffee has yet been supplied, to move the locking element (9) of the device towards the structural element of the switching ring (5) and/or to move the structural element of the switching ring (5) towards the locking element (9) of the device, preferably to move the locking element (9) into a second recess (8) of the switching ring (5), to move the locking element (9) towards an elevation of the switching ring (5), to move a second recess (8) of the switching ring (5) towards the locking element (9) and/or to move an elevation of the switching ring (5) towards the locking element (9), particularly preferably subsequently to release a coffee supply, in particular a spindle drive (30) of a brewing piston (29) of the coffee machine, or
iii) when an actuation signal is received from the microswitch (25), no coffee has yet been supplied and the coffee machine is given a signal to prepare a beverage by a user via an input device of the coffee machine, to move the locking element (9) of the device towards the structural element of the switching ring (5) and/or to move the structural element of the switching ring (5) towards the locking element (9) of the device, preferably to move the locking element (9) into a second recess (8) of the switching ring (5), to move the locking element (9) towards an elevation of the switching ring (5), to move a second recess (8) of the switching ring (5) towards the locking element (9) and/or to move an elevation of the switching ring (5) towards the locking element (9), particularly preferably subsequently to release a coffee supply, in particular a spindle drive (30) of a brewing piston (29) of the coffee machine; and/or
iv) when an actuation signal is received from the microswitch (25) and a supply of a coffee is completed, to move the locking element (9) of the device away from the structural element of the switching ring (5) and/or to move the structural element of the switching ring (5) away from the locking element (9) of the device, preferably to move the locking element (9) out of a second recess (8) of the switching ring (5), to move the locking element (9) away from an elevation of the switching ring (5), to move a second recess (8) of the switching ring (5) away from the locking element (9) and/or to move an elevation of the switching ring (5) away from the locking element (9); and/or
v) if no actuation signal is received from the microswitch (25), to block a coffee supply, in particular a spindle drive (30) of a brewing piston (29) of the coffee machine.

15. Use of the device according to any one of claims 1 to 11 in a coffee machine, preferably in a semi-automatic coffee machine or a hybrid coffee machine.

## Revendications

1. Dispositif pour la réception d'un porte-filtre (1) adapté pour l'extraction sous pression de café, comprenant
a) une unité de réception (2, 2') qui est adaptée pour recevoir un porte-filtre (1) adapté pour l'extraction sous pression de café par une rotation du porte-filtre (1) dans un premier sens de rotation (3) autour d'un axe de rotation (4) du porte-filtre (1) ;
b) une bague de commutation (5) sensiblement plate, qui est montée de manière à pouvoir tourner sur une partie de l'unité de réception (2, 2') et présente des premiers évidements (6, 6', 6"), qui sont adaptés respectivement pour la réception par complémentarité de forme respectivement d'une came (7) d'un porte-filtre (1) adapté pour l'extraction sous pression de café, dans lequel la bague de commutation (5) présente un élément structural ;
c) un élément de verrouillage (9) mobile ou immobile,
**caractérisé en ce que**
i) l'élément de verrouillage (9) est adapté pour se déplacer vers l'élément structural de la bague de commutation (5) et pour s'éloigner de l'élément structural de la bague de commutation (5), dans lequel un élément de verrouillage (9) déplacé vers l'élément structural de la bague de commutation (5) est adapté pour empêcher une rotation d'un porte-filtre (1) reçu dans l'unité de réception (2, 2') dans un deuxième sens de rotation (10) autour d'un axe de rotation (4) du porte-filtre (1) qui est opposé au premier sens de rotation (3) ; et/ou
ii) l'élément structural est adapté pour se déplacer vers l'élément de verrouillage (9) du dispositif et pour s'éloigner de l'élément de verrouillage (9) du dispositif, dans lequel un élément structural déplacé vers l'élément de verrouillage (9) est adapté pour empêcher une rotation d'un porte-filtre (1) reçu dans l'unité de réception (2, 2') dans un deuxième sens de rotation (10) autour d'un axe de rotation (4) du porte-filtre (1) qui est opposé au premier sens de rotation (3).

2. Dispositif selon la revendication 1, **caractérisé en ce que** l'élément structural de la bague de commutation (5) est un deuxième évidement (8) de la bague de commutation (5), dans lequel
i) l'élément de verrouillage (9) est adapté pour se déplacer dans le deuxième évidement (8) de la bague de commutation (5) et hors de celui-ci, dans lequel un élément de verrouillage (9) déplacé dans le deuxième évidement (8) de la bague de commutation (5) est adapté pour empêcher une rotation d'un porte-filtre (1) reçu dans l'unité de réception (2, 2') dans un deuxième sens de rotation (10) autour d'un axe de rotation (4) du porte-filtre (1) qui est opposé au premier sens de rotation (3) ; et/ou
ii) la bague de commutation (5) est adaptée pour déplacer le deuxième évidement (8) de la bague de commutation (5) vers l'élément de verrouillage (9) et pour l'éloigner de l'élément de verrouillage (9), dans lequel un deuxième évidement (8) déplacé vers l'élément de verrouillage (9) est adapté pour permettre une rotation d'un porte-filtre (1) reçu dans l'unité de réception (2, 2') dans un deuxième sens de rotation (10) autour d'un axe de rotation (4) du porte-filtre (1) qui est opposé au premier sens de rotation (3).

3. Dispositif selon la revendication 1, **caractérisé en ce que** l'élément structural de la bague de commutation (5) est une saillie de la bague de commutation (5), dans lequel
i) l'élément de verrouillage (9) est adapté pour se déplacer vers la saillie de la bague de commutation (5) et pour s'éloigner de la saillie de la bague de commutation (5), dans lequel un élément de verrouillage (9) déplacé vers la saillie de la bague de commutation (5) est adapté pour empêcher une rotation d'un porte-filtre (1) reçu dans l'unité de réception (2, 2') dans un deuxième sens de rotation (10) autour d'un axe de rotation (4) du porte-filtre (1) qui est opposé au premier sens de rotation (3) ; et/ou
ii) la saillie est adaptée pour se déplacer vers l'élément de verrouillage (9) et pour s'éloigner de l'élément de verrouillage (9), dans lequel une saillie déplacée vers l'élément de verrouillage (9) est adaptée pour empêcher une rotation d'un porte-filtre (1) reçu dans l'unité de réception (2, 2') dans un deuxième sens de rotation (10) autour d'un axe de rotation (4) du porte-filtre (1) qui est opposé au premier sens de rotation (3).

4. Dispositif selon l'une quelconque des revendications précédentes, **caractérisé en ce que** le dispositif présente un élément de commande qui est adapté, après une rotation d'un porte-filtre (1) inséré dans l'unité de réception (2, 2'), adapté pour l'extraction sous pression de café, dans une position finale (11), pour rapprocher et pour éloigner l'un de l'autre l'élément de verrouillage (9) du dispositif et l'élément structural de la bague de commutation (5), de préférence
i) pour déplacer l'élément de verrouillage (9) dans un deuxième évidement (8) de la bague de commutation (5) et/ou pour le déplacer hors d'un deuxième évidement de la bague de commutation (5), et/ou pour déplacer l'élément de verrouillage (9) vers une saillie de la bague de commutation (5) et/ou pour l'éloigner d'une saillie de la bague de commutation (5) ; et/ou
ii) pour déplacer un deuxième évidement (8) de la bague de commutation (5) vers l'élément de verrouillage (9) et/ou pour l'éloigner de l'élément de verrouillage (9) immobile, et/ou pour déplacer une saillie de la bague de commutation (5) vers l'élément de verrouillage (9) et/ou pour l'éloigner de l'élément de verrouillage (9) ;
dans lequel l'élément de commande est de préférence configuré pour effectuer ce mouvement par l'intermédiaire d'une force qui est choisie dans le groupe constitué par une force d'un moteur électrique, force d'un dispositif électromagnétique (12), force pneumatique, force hydraulique, force magnétique, force d'un ressort (13, 13') et des combinaisons de celles-ci.

5. Dispositif selon l'une quelconque des revendications précédentes, **caractérisé en ce que** l'élément de verrouillage (9) présente un ressort (13, 13') et/ou deux aimants permanents qui est/sont adaptés
i) pour maintenir l'élément de verrouillage (9) dans une position dans laquelle l'élément de verrouillage (9) est déplacé hors d'un deuxième évidement de la bague de commutation (5) et/ou est éloigné d'une saillie de la bague de commutation (5), dans lequel l'élément de verrouillage (9) est de préférence relié à un dispositif qui est adapté pour déplacer l'élément de verrouillage (9) dans le deuxième évidement (8) de la bague de commutation (5) et/ou pour le déplacer vers une saillie de la bague de commutation (5), dans lequel le dispositif est de manière particulièrement préférée choisi dans le groupe constitué par un moteur électrique, dispositif électromagnétique (12), dispositif pneumatique, dispositif hydraulique et des combinaisons de ceux-ci ; ou
ii) pour maintenir l'élément de verrouillage (9) dans une position dans laquelle l'élément de verrouillage (9) est déplacé dans un deuxième évidement (8) de la bague de commutation (5) et/ou est déplacé vers une saillie de la bague de commutation (5), dans lequel l'élément de verrouillage (9) est de préférence relié à un dispositif, qui est adapté pour déplacer l'élément de verrouillage (9) hors du deuxième évidement de la bague de commutation (5) et/ou pour l'éloigner de la saillie de la bague de commutation (5), dans lequel le dispositif est de manière particulièrement préférée choisi dans le groupe constitué par un moteur électrique, dispositif électromagnétique (12), dispositif pneumatique, dispositif hydraulique et des combinaisons de ceux-ci.

6. Dispositif selon l'une quelconque des revendications précédentes, **caractérisé en ce que** l'élément structural de la bague de commutation (5) présente un ressort et/ou deux aimants permanents qui est/sont adaptés
i) pour maintenir l'élément structural dans une position dans laquelle l'élément structural est éloigné de l'élément de verrouillage (9), dans lequel l'élément structural est de préférence relié à un dispositif qui est adapté pour déplacer l'élément structural vers l'élément de verrouillage (9), dans lequel le dispositif est de manière particulièrement préférée choisi dans le groupe constitué par un moteur électrique, dispositif électromagnétique, dispositif pneumatique, dispositif hydraulique et des combinaisons de ceux-ci ; ou
ii) pour maintenir l'élément structural dans une position dans laquelle l'élément structural est déplacé vers l'élément de verrouillage (9), dans lequel l'élément structural est de préférence relié à un dispositif qui est adapté pour éloigner l'élément structural de l'élément de verrouillage (9), dans lequel le dispositif est de manière particulièrement préférée choisi dans le groupe constitué par un moteur électrique, dispositif électromagnétique, dispositif pneumatique, dispositif hydraulique et des combinaisons de ceux-ci.

7. Dispositif selon l'une quelconque des revendications précédentes, **caractérisé en ce que** le dispositif
i) comprend une bague de commutation (5) qui présente un support de palier (14), dans lequel le support de palier (14) présente un roulement à billes (16) monté mobile sur le support de palier (14) et au moins un ressort (17), dans lequel le support de palier (14) est relié à la bague de commutation (5) par l'intermédiaire de l'au moins un ressort (17) ; et
ii) comprend une coulisse (18) qui est disposée en face du support de palier (14) de la bague de commutation (5) et présente une surface (19, 22, 24) courbée sensiblement en forme de cercle, dans lequel l'au moins un ressort (17) du support de palier (14) presse le support de palier (14) et, par l'intermédiaire du support de palier (14), le roulement à billes (16) du support de palier (14) contre la surface (19, 22, 24) de la coulisse (18) du dispositif courbée sensiblement en forme de cercle.

8. Dispositif selon la revendication précédente, **caractérisé en ce que** la coulisse (18) présente une première rampe (20) qui s'étend en direction du support de palier, dans lequel la première rampe (20) de préférence
i) en direction du premier sens de rotation (3), à côté d'une position initiale (21) d'un porte-filtre (1) inséré dans l'unité de réception (2, 2') du dispositif, adapté pour l'extraction sous pression de café, est disposée sur la coulisse (18) ; et/ou
ii) présente une hauteur de 1 à 4 mm, de préférence 1,5 à 3,5 mm, de manière particulièrement préférée 2 à 3 mm, en particulier de 2,5 mm, par rapport à une surface (22) de la coulisse (18) qui fait face au roulement à billes (16) du support de palier (14) dans une position initiale (21) d'un porte-filtre (1) inséré dans l'unité de réception (2, 2') du dispositif, adapté pour l'extraction sous pression de café ; et/ou
iii) présente une longueur de 20 à 60 mm, de préférence 30 à 50 mm, de manière particulièrement préférée 35 à 45 mm, en particulier de 40 mm, dans le premier sens de rotation (3).

9. Dispositif selon la revendication précédente, **caractérisé en ce que** la coulisse (18) présente une deuxième rampe (23) qui s'étend en direction du support de palier, dans lequel la deuxième rampe (23) de préférence
i) en direction du deuxième sens de rotation (10), à côté d'une position finale (11) d'un porte-filtre (1) inséré dans l'unité de réception (2, 2') du dispositif, adapté pour l'extraction sous pression de café, est disposée sur la coulisse (18) ; et/ou
ii) présente une hauteur de 3,5 à 6,5 mm, de préférence 4 à 6 mm, de manière particulièrement préférée 4,5 à 5,5 mm, en particulier de 5 mm, par rapport à une surface (24) de la coulisse (18) qui fait face au roulement à billes (16) du support de palier (14) dans une position finale (11) d'un porte-filtre (1) inséré dans l'unité de réception (2, 2') du dispositif, adapté pour l'extraction sous pression de café ; et/ou
iii) présente une longueur de 5 à 35 mm, de préférence 10 à 30 mm, de manière particulièrement préférée 15 à 25 mm, en particulier de 20 mm, dans le premier sens de rotation (3).

10. Dispositif selon l'une quelconque des revendications précédentes, **caractérisé en ce que** le dispositif présente un microrupteur (25), qui est adapté
i) dans une position finale (11) d'un porte-filtre (1) inséré dans l'unité de réception (2, 2'), adapté pour l'extraction sous pression de café, pour être actionné par la bague de commutation (5) du dispositif; et/ou
ii) dans une position autre que la position finale (11) d'un porte-filtre (1) inséré dans l'unité de réception (2, 2'), adapté pour l'extraction sous pression de café, pour ne pas être actionné par la bague de commutation (5) du dispositif, dans lequel l'autre position se trouve de préférence le deuxième sens de rotation (10) à partir d'une position finale (11) d'un porte-filtre (1) inséré dans l'unité de réception (2, 2'), adapté pour l'extraction sous pression de café.

11. Dispositif selon l'une quelconque des revendications précédentes, **caractérisé en ce que** l'unité de réception (2, 2'), de préférence une partie de l'unité de réception (2, 2'), présente une première butée (26) et une deuxième butée (27), dans lequel de préférence
i) la première butée (26) est disposée dans un deuxième évidement de la bague de commutation (5) ou est disposée en direction du deuxième sens de rotation (10) à côté d'une saillie de la bague de commutation (5) sans s'étendre dans un deuxième évidement (8) de la bague de commutation (5), est en contact avec la bague de commutation (5) dans une position initiale (21) d'un porte-filtre (1) inséré dans l'unité de réception (2, 2'), adapté pour l'extraction sous pression de café, et est conçue pour empêcher un mouvement de la bague de commutation (5) à partir de la position initiale (21) dans le deuxième sens de rotation (10) ; et/ou
ii) la deuxième butée (27) est disposée dans un autre évidement (28) de la bague de commutation (5) ou est disposée en direction du premier sens de rotation (3) à côté d'une autre saillie de la bague de commutation (5) sans s'étendre dans un deuxième évidement (8) de la bague de commutation (5), est en contact avec la bague de commutation (5) dans une position finale (11) d'un porte-filtre (1) inséré dans l'unité de réception (2, 2') du dispositif, adapté pour l'extraction sous pression de café, et est conçue pour empêcher un mouvement de la bague de commutation (5) à partir de la position finale (11) dans le premier sens de rotation (3).

12. Machine à café comprenant un dispositif selon l'une quelconque des revendications précédentes et une unité de commande.

13. Machine à café selon la revendication 12, **caractérisée en ce que** la machine à café comprend un dispositif selon l'une quelconque des revendications 4 à 11, dans laquelle l'unité de commande de la machine à café est configurée pour commander l'élément de commande du dispositif, dans laquelle l'unité de commande de la machine à café est de préférence configurée pour faire en sorte que l'élément de verrouillage (9) du dispositif et l'élément structural de la bague de commutation (5) soient rapprochés et/ou soient éloignés l'un de l'autre, dans laquelle l'unité de commande de la machine à café est de manière particulièrement préférée configurée pour faire en sorte que
i) l'élément de verrouillage (9) soit déplacé dans un deuxième évidement (8) de la bague de commutation (5) et/ou soit déplacé vers une saillie de la bague de commutation (5) lorsqu'un porte-filtre (1) inséré dans l'unité de réception (2, 2'), adapté pour l'extraction sous pression de café, a été disposé dans une position finale (11) dans l'unité de réception (2, 2') et qu'aucun café n'a encore été distribué, dans laquelle l'unité de commande de la machine à café est configurée de manière particulièrement préférée pour commander à cet effet un dispositif qui est choisi dans le groupe constitué par un moteur électrique, dispositif électromagnétique (12), dispositif pneumatique, dispositif hydraulique et des combinaisons de ceux-ci ; et/ou
ii) l'élément de verrouillage (9) soit déplacé hors d'un deuxième évidement (8) de la bague de commutation (5) et/ou soit éloigné d'une saillie de la bague de commutation (5) lorsqu'un porte-filtre (1) inséré dans l'unité de réception (2, 2'), adapté pour l'extraction sous pression de café, est disposé dans une position finale (11) dans l'unité de réception (2, 2') et qu'un café a déjà été distribué, dans laquelle l'unité de commande de la machine à café est configurée de manière particulièrement préférée pour commander à cet effet un dispositif qui est choisi dans le groupe constitué par un moteur électrique, dispositif électromagnétique (12), dispositif pneumatique, dispositif hydraulique et des combinaisons de ceux-ci ; et/ou
iii) l'élément structural de la bague de commutation (5) soit déplacé vers l'élément de verrouillage (9) lorsqu'un porte-filtre (1) inséré dans l'unité de réception (2, 2'), adapté pour l'extraction sous pression de café, a été disposé dans une position finale (11) dans l'unité de réception (2, 2') et qu'aucun café n'a encore été distribué, dans laquelle l'unité de commande de la machine à café est configurée de manière particulièrement préférée pour commander à cet effet un dispositif qui est choisi dans le groupe constitué par un moteur électrique, dispositif électromagnétique, dispositif pneumatique, dispositif hydraulique et des combinaisons de ceux-ci ; et/ou
iv) l'élément structural de la bague de commutation (5) est éloigné de l'élément de verrouillage (9) lorsqu'un porte-filtre (1) inséré dans l'unité de réception (2, 2'), adapté pour l'extraction sous pression de café, est disposé dans une position finale (11) dans l'unité de réception (2, 2') et qu'un café a déjà été distribué, dans laquelle l'unité de commande de la machine à café est configurée de manière particulièrement préférée pour commander à cet effet un dispositif qui est choisi dans le groupe constitué par un moteur électrique, dispositif électromagnétique, dispositif pneumatique, dispositif hydraulique et des combinaisons de ceux-ci.

14. Machine à café selon l'une quelconque des revendications 12 ou 13, **caractérisée en ce que** la machine à café comprend un dispositif selon l'une quelconque des revendications 10 ou 11, dans laquelle l'unité de commande de la machine à café est configurée pour recevoir des signaux du microrupteur (25) du dispositif, dans laquelle l'unité de commande de la machine à café est configurée de préférence,
i) lorsqu'un signal d'actionnement est reçu par le microrupteur (25) et qu'aucune distribution de café n'a encore eu lieu, une sélection de boissons correspondant au porte-filtre (1) inséré est affichée sur un dispositif d'affichage de la machine à café ; et/ou
ii) lorsqu'un signal d'actionnement est reçu par le microrupteur (25) et qu'aucune distribution de café n'a encore eu lieu, pour déplacer l'élément de verrouillage (9) du dispositif vers l'élément structural de la bague de commutation (5) et/ou pour déplacer l'élément structural de la bague de commutation (5) vers l'élément de verrouillage (9) du dispositif, de préférence pour déplacer l'élément de verrouillage (9) dans un deuxième évidement (8) de la bague de commutation (5), pour déplacer l'élément de verrouillage (9) vers une saillie de la bague de commutation (5), pour déplacer un deuxième évidement (8) de la bague de commutation (5) vers l'élément de verrouillage (9) et/ou pour déplacer une saillie de la bague de commutation (5) vers l'élément de verrouillage (9), de manière particulièrement préférée pour libérer ensuite une distribution de café, en particulier un entraînement à broche (30) d'un piston d'infusion (29) de la machine à café, ou
lorsqu'un signal d'actionnement est reçu par le microrupteur (25), qu'aucune distribution de café n'a encore eu lieu et qu'un signal de préparation d'une boisson est envoyé à la machine à café par un utilisateur par l'intermédiaire d'un dispositif d'entrée de la machine à café, pour déplacer l'élément de verrouillage (9) du dispositif vers l'élément structural de la bague de commutation (5) et/ou pour déplacer l'élément structural de la bague de commutation (5) vers l'élément de verrouillage (9) du dispositif, de préférence pour déplacer l'élément de verrouillage (9) dans un deuxième évidement (8) de la bague de commutation (5), pour déplacer l'élément de verrouillage (9) vers une saillie de la bague de commutation (5), pour déplacer un deuxième évidement (8) de la bague de commutation vers l'élément de verrouillage (9) et/ou pour déplacer une saillie de la bague de commutation (5) vers l'élément de verrouillage (9), de manière particulièrement préférée pour libérer ensuite une distribution de café, en particulier un entraînement à broche (30) d'un piston d'infusion (29) de la machine à café ; et/ou
iii) lorsqu'un signal d'actionnement est reçu par le microrupteur (25) et qu'une distribution d'un café est achevée, pour éloigner l'élément de verrouillage (9) du dispositif de l'élément structural de la bague de commutation (5) et/ou pour éloigner l'élément structural de la bague de commutation (5) de l'élément de verrouillage (9) du dispositif, de préférence pour déplacer l'élément de verrouillage (9) hors d'un deuxième évidement de la bague de commutation (5), pour éloigner l'élément de verrouillage (9) d'une saillie de la bague de commutation (5), pour éloigner un deuxième évidement (8) de la bague de commutation (5) de l'élément de verrouillage (9) et/ou pour éloigner une saillie de la bague de commutation (5) de l'élément de verrouillage (9) ; et/ou
iv) lorsqu'aucun signal d'actionnement n'est reçu par le microrupteur (25), pour bloquer une distribution de café, en particulier un entraînement de broche (30) d'un piston d'infusion (29) de la machine à café.

15. Utilisation du dispositif selon l'une quelconque des revendications 1 à 11 dans une machine à café, de préférence dans une machine à café semi-automatique ou une machine à café hybride.
